# EUROPEAN PATENT APPLICATION

(11) **EP 4 848 101 A1**
(43) Date of publication of application: **02.12.2026**
(21) Application number: 24926756.8
(22) Date of filing: 09.10.2024
(51) Int. Cl.: G06F 16/332, G06F 40/30, G06N 5/04, G06F 3/0485

(54) **INTERACTION METHOD, ELECTRONIC DEVICE, READABLE STORAGE MEDIUM, AND PROGRAM PRODUCT**

(30) Priority: 26.02.2024 CN 202410211616
(71) Applicant: HUAWEI TECHNOLOGIES CO., LTD., Shenzhen, Guangdong 518129 (CN)
(72) Inventor: WANG, Fangshan, Shenzhen, Guangdong 518129 (CN); KANG, Sichen, Shenzhen, Guangdong 518129 (CN)
(74) Representative: Huawei European IPR
(86) International application number: PCT/CN2024/123731
(87) International publication number: WO 2025/179890

(57) **Abstract**

This application relates to the field of computer technologies, and in particular, to an interaction method, an electronic device, a readable storage medium, and a program product. In the method, conversation scenario data of two parties in a conversation may be first obtained, and then it is determined whether retrieval is required based on the conversation scenario data. If retrieval is not required, a reply is directly generated based on the conversation scenario data. If retrieval is required, precise retrieval is performed in a resource database to obtain a required retrieval result, and a reply is generated based on the obtained retrieval result. It may be understood that, because whether retrieval is required is determined and, when retrieval is required, specific information is retrieved from the resource database, and the reply is generated based on the retrieval result, the reply includes information from the retrieval result, thereby making the generated reply more accurate and improving user experience of using a conversation system.

## Description

This application claims priority to Chinese Patent Application No. 202410211616.7, filed with the China National Intellectual Property Administration February 26, 2024 and entitled "INTERACTION METHOD, ELECTRONIC DEVICE, READABLE STORAGE MEDIUM, AND PROGRAM PRODUCT", which is incorporated herein by reference in its entirety.

### TECHNICAL FIELD

This application relates to the field of computer technologies, and in particular, to an interaction method, an electronic device, a readable storage medium, and a program product.

### BACKGROUND

Currently, the artificial intelligence technology may be applied to a scenario in which a person transfers a message to another person via an electronic device. For example, when a person chats with another person through an application on a mobile phone, an application (application, app) used by each user may help the user generate reply content based on a message sent by the other party, to assist the user in replying to the other party.

In a conventional technology, because a large model has semantic analysis and logical inference capabilities, the large model, for example, a large language model for artificial intelligence generated content (artificial intelligence generated content, AIGC), may be used to generate reply content based on content of network communication between two parties, to assist the user in replying to the message currently sent by the other party. However, currently, in some scenarios in which retrieval is required, for example, when a conversation scenario includes content such as watching a movie or arranging an activity, an accurate reply cannot be generated.

### SUMMARY

To resolve the foregoing problem, embodiments of this application provide an interaction method, an electronic device, a readable storage medium, and a program product, to resolve a problem that an accurate reply cannot be provided for a user in real time when retrieval is required in a human-to-human conversation scenario.

According to a first aspect, an embodiment of this application provides an interaction method. The method includes: displaying a first user conversation; when the first user conversation is a user conversation requiring retrieval, displaying a first reply related to a retrieval result corresponding to the first user conversation, where the retrieval result is obtained through retrieval based on a retrieval intent of the first user conversation; and when the first user conversation is a user conversation not requiring retrieval, displaying a second reply for the first user conversation.

It may be understood that, in a process of chatting between two parties, electronic device displays the user conversation and the user conversation. In this case, the electronic device may display a reply in real time during a chat of the user, to help the user send a message to the other party. In addition, sometimes, when the user chats, some topics that require retrieval in a database are involved, for example, content such as watching a movie and arranging an activity is involved. In this case, retrieval is required. Therefore, different replies may be separately displayed based on whether the user conversation is the user conversation requiring retrieval. If retrieval is required, for example, when content such as knowledge-based question answering, a personal activity arrangement, user information, movie watching, and shopping is involved in the current conversation scenario, the first reply related to the retrieval result may be displayed. In other words, the first reply includes content related to the retrieval result. If the retrieval is not required, for example, the two parties in the conversation are only in a chat, the second reply is displayed, where the second reply does not include the content related to the retrieval result.

It may be understood that, because whether retrieval is required is determined, and processing is performed in different manners when retrieval is required and when retrieval is not required, the generated reply is relevant. In the scenario in which retrieval is required, because the generated reply includes the content related to the retrieval result, the generated reply is more accurate in this case, thereby improving user experience of using a conversation system.

It may be understood that, because the retrieval result is obtained through retrieval based on the retrieval intent of the first user conversation, in a scenario in which retrieval is not required, that is, the retrieval intent does not need to be identified, time and compute resources are saved.

In a possible implementation of the first aspect, the method further includes: displaying the first reply or the second reply in a card format or a list format, where the first reply or the second reply may include at least one data form of a text, an image, a voice, a video, and a link.

In a possible implementation of the first aspect, the method further includes:
obtaining conversation scenario data related to the first user conversation, where the conversation scenario data includes at least one of conversation content of the first user conversation, user behavior information associated with the first user conversation, and a physiological indicator of the user when performing the first user conversation; and invoking a large language model. The large language model determines, based on the conversation scenario data, whether the first user conversation is the user conversation requiring retrieval; and when the first user conversation is the user conversation requiring retrieval, the large language model identifies the retrieval intent of the first user conversation based on the conversation scenario data.

It may be understood that the conversation content of the first user conversation may include current and historical conversation content of the two parties in the conversation. The behavior information of the user for the first user conversation may include user behavior information such as editing, browsing, and page sliding of the current user in the conversation system. The physiological indicator of the user when performing the first user conversation may include a heart rate, a facial expression, and the like. It may be understood that using the multi-dimensional conversation scenario data can improve accuracy of determining whether retrieval is required, so that when retrieval is required, that retrieval is required is reflected in time, thereby improving accuracy and timeliness of conversation processing. In addition, because the conversation scenario data includes multi-dimensional data, elements used to generate a reply are abundant. In this case, when the reply is generated based on the multi-dimensional data, the generated reply is more accurate.

In a possible implementation of the first aspect, the first reply includes a fused retrieval result corresponding to the retrieval result.

It may be understood that the fused retrieval result includes both content corresponding to the retrieval result and a retrieval answer that corresponds to the retrieval result and that can be used to answer a message sent by the other party, and the retrieval answer corresponds to the retrieval result, so that the user can obtain a comprehensive, relevant, and accurate reply.

In a possible implementation of the first aspect, the fused retrieval result is obtained in the following manner: The large language model generates the fused retrieval result based on the input retrieval result and the conversation scenario data of the first user conversation.

It may be understood that the retrieval result and the conversation scenario data of the first user conversation are used as inputs of the large language model, so that the large model can fuse the retrieval result corresponding to the retrieval intent with content obtained through analysis on the conversation scenario data, to provide a high-quality reply for the user.

In a possible implementation of the first aspect, the retrieval result is obtained in the following manner: performing retrieval in a resource database based on retrieval information corresponding to the retrieval intent, to obtain the retrieval result, where the retrieval information includes at least one of a keyword corresponding to the retrieval intent and a search sentence corresponding to the retrieval intent. The resource database includes a local resource database or a cloud resource database, the local resource database includes local data or a local application, and the cloud resource database includes an application or a service deployed in a cloud.

It may be understood that, because retrieval is performed in various resource databases, the obtained retrieval result is comprehensive.

In a possible implementation of the first aspect, the method further includes: When the first user conversation is the user conversation requiring retrieval, the large language model generates the second reply based on the conversation scenario data.

It may be understood that the large language model has semantic understanding and inference capabilities, and the large language model can effectively generate the second reply based on the conversation scenario data.

In a possible implementation of the first aspect, the second reply includes a conversation answer and a reason for the conversation answer.

It may be understood that when retrieval is not required, and the reply is generated based on the conversation scenario data, the generated reply may include the conversation answer and the reason for the answer. The reason for the answer is analysis content of the generated conversation answer, and emotional reactions of the two parties in the conversation are considered in the reason for the answer or the conversation answer, to improve accuracy of reply information and avoid mutual dislike caused by inappropriate reply content. It can be understood that the electronic device may use a pre-trained large language model, with the conversation scenario data used as an input, to obtain the conversation answer and the reason for the answer. The output reply is required to consider emotional tendencies of the two parties, so that the large model can generate, based on the conversation scenario data, the conversation answer and the reason for the answer that meet a current user requirement, and intents and emotional tendencies of the two parties can be considered in output content.

According to a second aspect, an embodiment of this application provides an interaction method, applied to an electronic device. The method includes: displaying a first user conversation; and displaying a first reply for the first user conversation based on conversation scenario data of the first user conversation, where the conversation scenario data includes at least one of user behavior information associated with the first user conversation and a physiological indicator of the user when performing the first user conversation.

It may be understood that the conversation content of the first user conversation may include current and historical conversation content of the two parties in the conversation. The behavior information of the user for the first user conversation may include user behavior information such as editing, browsing, and page sliding of the current user in the conversation system. The physiological indicator of the user when performing the first user conversation may include a heart rate, a facial expression, and the like. It may be understood that, the multi-dimensional conversation scenario data is used, so that elements used to generate a reply are abundant, and the generated reply is more accurate.

In a possible implementation of the second aspect, the first reply includes at least one of the following: a retrieval result corresponding to the first user conversation, a fused retrieval result related to the retrieval result, a conversation answer, and a reason for the conversation answer.

In a possible implementation of the second aspect, the method further includes: invoking a large language model, and determining, by the large language model based on the conversation scenario data, whether the first user conversation is a user conversation requiring retrieval; displaying the retrieval result or the fused retrieval result when the first user conversation is the user conversation requiring retrieval; and when the first user conversation is a user conversation not requiring retrieval, displaying the conversation answer and the reason for the conversation answer.

It may be understood that, whether retrieval is required is determined based on the conversation scenario data, and different content is displayed when retrieval is required and when retrieval is not required, so that a displayed reply is relevant, and user experience is improved.

In a possible implementation of the second aspect, the fused retrieval result is obtained in the following manner: The large language model identifies a retrieval intent of the first user conversation based on the conversation scenario data; the large language model performs retrieval in the resource database based on retrieval information corresponding to the retrieval intent, to obtain the retrieval result, where the retrieval information includes at least one of a keyword corresponding to the retrieval intent and a search sentence corresponding to the retrieval intent; and the large language model generates the fused retrieval result based on the input retrieval result and the conversation scenario data of the first user conversation.

In a possible implementation of the second aspect, the conversation answer and the reason for the conversation answer are obtained in the following manner: When the first user conversation is the user conversation requiring retrieval, the large language model generates, based on the conversation scenario data, the conversation answer and the reason for the conversation answer.

In a possible implementation of the second aspect, the method further includes: displaying the first reply in a card format or a list format, where the first reply may include at least one data form of a text, an image, a voice, a video, and a link.

According to a third aspect, an embodiment of this application provides an interaction method, applied to an electronic device. The method includes: displaying a first user conversation; and displaying a first reply corresponding to the first user conversation, where the first reply includes a conversation answer and a reason for the conversation answer.

It may be understood that when the reply is generated based on conversation scenario data, the generated reply may include the conversation answer and the reason for the answer. The reason for the answer is analysis content of the generated conversation answer, and emotional reactions of the two parties in the conversation are considered in the reason for the answer or the conversation answer, to improve accuracy of reply information and avoid mutual dislike caused by inappropriate reply content.

In a possible implementation of the third aspect, the method further includes: obtaining conversation scenario data related to the first user conversation, where the conversation scenario data includes at least one of conversation content of the first user conversation, user behavior information associated with the first user conversation, and a physiological indicator of the user when performing the first user conversation; and invoking a large language model. The large language model generates the first reply based on the conversation scenario data.

It can be understood that the electronic device may use a pre-trained large language model, with the conversation scenario data used as an input, to obtain the conversation answer and the reason for the answer. The output reply is required to consider emotional tendencies of the two parties, so that the large model can generate, based on the conversation scenario data, the conversation answer and the reason for the answer that meet a current user requirement, and intents and emotional tendencies of the two parties can be considered in output content.

In a possible implementation of the third aspect, the method further includes: The large language model determines based on conversation scenario data, whether the first user conversation is a user conversation requiring retrieval; and generates the first reply when the first user conversation is a user conversation not requiring retrieval.

According to a fourth aspect, an embodiment of this application provides an interaction method, applied to an electronic device. The method includes: displaying a first user conversation, where the first user conversation is a user conversation requiring retrieval; and displaying a first reply related to a retrieval result corresponding to the first user conversation, where the first reply includes a fused retrieval result corresponding to the retrieval result, and the retrieval result is obtained through retrieval based on a retrieval intent of the first user conversation.

In a possible implementation of the fourth aspect, the method further includes: obtaining conversation scenario data related to the first user conversation, where the conversation scenario data includes at least one of conversation content of the first user conversation, user behavior information associated with the first user conversation, and a physiological indicator of the user when performing the first user conversation; and invoking a large language model. The large model generates the first reply based on the conversation scenario data and the retrieval result.

In a possible implementation of the fourth aspect, the method further includes: The large language model determines based on the conversation scenario data, whether the first user conversation is a user conversation requiring retrieval; and the large language model generates the first reply when the first user conversation is the user conversation requiring retrieval.

According to a fifth aspect, an embodiment of this application provides an electronic device, including a memory, configured to store instructions, and one or more processors. When the instructions are executed by the one or more processors, the processor performs any interaction method in the first aspect and the implementations of the first aspect, any interaction method in the second aspect and the implementations of the second aspect, any interaction method in the third aspect and the implementations of the third aspect, or any interaction method in the fourth aspect and the implementations of the fourth aspect.

According to a sixth aspect, an embodiment of this application provides a computer-readable storage medium. The computer-readable storage medium stores instructions, and the instructions are used to perform, on an electronic device, any interaction method in the first aspect and the implementations of the first aspect, any interaction method in the second aspect and the implementations of the second aspect, any interaction method in the third aspect and the implementations of the third aspect, or any interaction method in the fourth aspect and the implementations of the fourth aspect.

According to a seventh aspect, an embodiment of this application provides a computer program product. The computer program product includes computer program code. When the computer program code is run on a computer, the computer is enabled to perform any interaction method in the first aspect and the implementations of the first aspect, any interaction method in the second aspect and the implementations of the second aspect, any interaction method in the third aspect and the implementations of the third aspect, or any interaction method in the fourth aspect and the implementations of the fourth aspect.

For beneficial effect of the fifth aspect to the seventh aspect, refer to beneficial effect related to the first aspect, the second aspect, the third aspect, and the fourth aspect. Details are not described herein again.

### BRIEF DESCRIPTION OF DRAWINGS

FIG. 1A is a diagram of a human-to-human chat conversation scenario according to some embodiments of this application;
FIG. 1B is a diagram of a chat interface 001 according to some embodiments of this application;
FIG. 2A is a diagram of a chat interface 002 according to some embodiments of this application;
FIG. 2B is a diagram of a chat interface 003 according to some embodiments of this application;
FIG. 3 is a diagram of an interaction method according to some embodiments of this application;
FIG. 4A is a diagram of a system architecture 400 according to some embodiments of this application;
FIG. 4B is a diagram of interaction between a terminal 100B and a cloud 200 according to some embodiments of this application;
FIG. 5A is a diagram of an interface 004 according to some embodiments of this application;
FIG. 5B is a schematic flowchart of retrieval according to some embodiments of this application;
FIG. 6 is a diagram of modules of a terminal 100 and a cloud 200 according to some embodiments of this application;
FIG. 7 is another diagram of modules of a terminal 100 and a cloud 200 according to some embodiments of this application; and
FIG. 8 is a diagram of an apparatus according to some embodiments of this application.

### DESCRIPTION OF EMBODIMENTS

The illustrative embodiments of this application include but are not limited to an interaction method, an electronic device, a readable storage medium, and a program product.

As described above, currently, in a process of chatting between two parties in a conversation, when conversation content involves some scenarios in which retrieval is required, an accurate reply cannot be generated.

The following describes embodiments of this application with reference to the accompanying drawings.

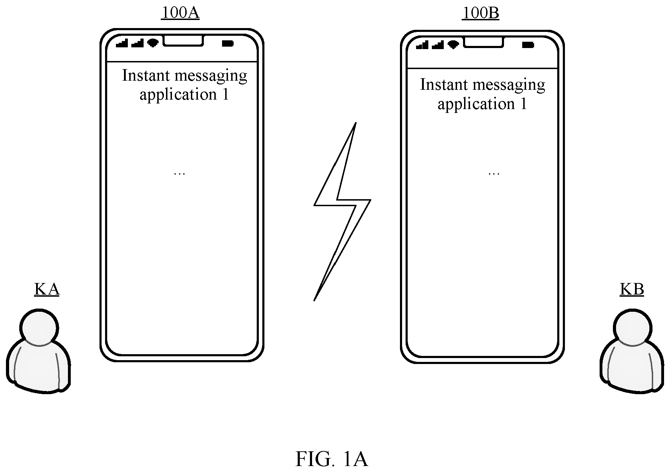

FIG. 1A shows a human-to-human chat conversation scenario according to some embodiments of this application. A user KA and a user KB separately use a same chat application (for example, an instant messaging application 1 in the figure) on terminals for communication. It may be understood that the chat application is a conversation system that allows two parties in a conversation to chat with each other. For ease of description, a conversation system on a terminal 100A is referred to as a "conversation system A0", and a conversation system on a terminal 100B is referred to as a "conversation system B0". In this case, the user KA and the user KB respectively use the conversation system A0 and the conversation system B0 for a conversation.

Currently, the conversation system may further recommend auto reply content to the user based on a chat record of the user.

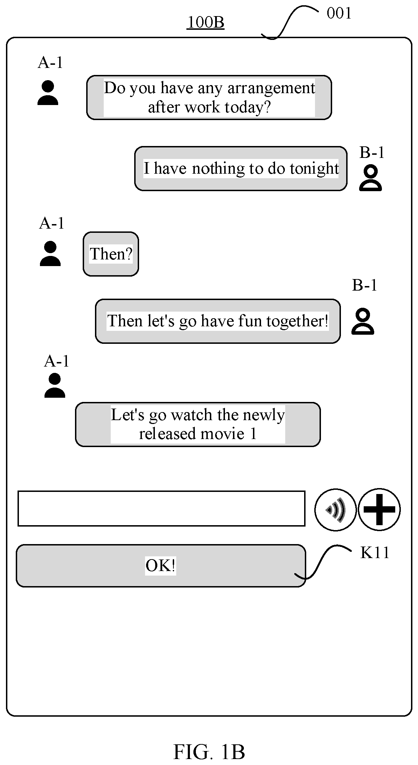

FIG. 1B is a diagram of a chat interface 001 of the terminal 100B based on the conversation system B0 during a chat between the user KA and the user KB according to some embodiments of this application. Content sent by a "user A-1" on the interface 001 is chat content sent by the user KA via the terminal 100A, and content sent by a "user B-1" on the interface 001 is chat content sent by the user KB via the terminal 100B. Specifically, refer to the chat content on the interface 001. The user KA sends, to the terminal 100B via the terminal 100A, content "Do you have any arrangement after work today?" corresponding to the user A-1 shown in the figure. The user KB replies to the user KA via the terminal 100B with content "I have nothing to do tonight" corresponding to the user B-1 in the figure; and the user KA continues to send, to the terminal 100B via the terminal 100A, content "Then?" corresponding to the user A-1 shown in the figure. At this time, the user KB replies with content "Then let's go have fun together!" corresponding to the user B-1 shown in the figure. The user KA continues to reply content "Let's go watch the newly released movie 1" corresponding to the user A-1 shown in the figure. In this case, the conversation system generates a simple reply "OK!" in a prompt card K11 shown in FIG. 1B.

It may be understood that the conversation scenario shown in FIG. 1B includes content related to the movie 1, but the generated reply does not involve movie content, and the generated reply is not accurate enough. It may be understood that, in this case, if the user needs to obtain accurate information about the movie 1, the user needs to perform retrieval in an application for purchasing movie tickets, to obtain accurate information about the movie 1.

Therefore, to resolve the foregoing problem, this application provides an interaction method. In the method, conversation scenario data of two parties in a conversation may be first obtained, and then it is determined whether retrieval is required based on the conversation scenario data. If the conversation scenario data does not require retrieval, for example, the two parties in the conversation are merely in small talk, a reply is directly generated based on the conversation scenario data. If retrieval is required, for example, when content such as knowledge-based question answering, a personal activity arrangement, user information, movie watching, or shopping is involved in the current conversation scenario, precise retrieval is performed in a resource database, for example, a local resource database or a cloud resource database, to obtain a required retrieval result, so as to generate a reply based on the obtained retrieval result. It may be understood that, because whether retrieval is required is determined, and processing is performed in different manners when retrieval is required and when retrieval is not required, the generated reply is more relevant. In addition, in a scenario in which retrieval is required, specific information needs to be retrieved from the resource database, and the reply is generated based on the retrieval result, that is, content of the reply includes content of the retrieval result, so that the generated reply is more accurate, and user experience of using the conversation system is improved. In addition, in a scenario in which retrieval is not required, because the reply is directly generated based on the conversation scenario data, time and compute resources are saved.

For example, in the scenario shown in FIG. 1B, when it is determined that retrieval is required, a large model may be used to understand and analyze a conversation, to obtain a retrievable keyword or phrase related to movie watching. For example, the obtained keyword is "movie 1". In addition, retrieval is performed in various resource databases based on the keyword to obtain precise information, and then a reply related to a retrieval result is generated based on the retrieval result, so that the generated reply is more accurate.

In some embodiments, to improve accuracy of a determining result of whether retrieval is required, multi-dimensional data may be obtained as conversation scenario data. For example, the conversation scenario data may include current and historical conversation content of two parties in a conversation, user behavior information such as editing, browsing, and page sliding of a current user in a conversation system, and physiological indicator data of the current user, such as a heart rate and a facial expression, to determine whether retrieval is required. This improves accuracy in determining whether retrieval is required, so that when retrieval is required, that retrieval is required is reflected in time, thereby improving accuracy and timeliness of conversation processing. In addition, because the conversation scenario data includes the multi-dimensional data, elements used to generate a reply are abundant. In this case, when the reply is generated based on the multi-dimensional data, the generated reply is more accurate.

In addition, in some embodiments, when retrieval is not required, and the reply is generated based on the conversation scenario data, the generated reply may include a conversation answer and a reason for the answer. The reason for the answer is analysis content of the generated conversation answer, and emotional reactions of the two parties in the conversation are considered in the reason for the answer or the conversation answer, to improve accuracy of reply information and avoid mutual dislike caused by inappropriate reply content. For example, a terminal device may use a pre-trained large model, with the conversation scenario data as an input, to obtain the conversation answer and the reason for the answer. The output reply is required to consider emotional tendencies of the two parties, so that the large model can generate, based on the conversation scenario data, the conversation answer and the reason for the answer that meet the current user requirement, and intents and emotional tendencies of the two parties can be considered in output content.

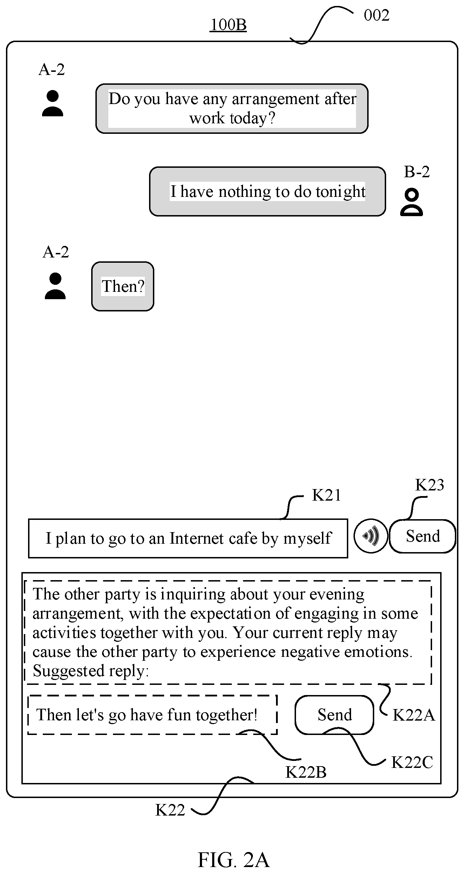

FIG. 2A is a diagram of a chat interface 002 of the terminal 100B based on the conversation system B1 during the chat between the user KA and the user KB according to some embodiments of this application. On the interface 002 of the terminal 100B, content "Then?" sent by the "user A-2" to the "user B-2" is displayed. The user KB may perform some reply operations in an input box K21 of the conversation system B1 for the content sent by the user KA. For example, the user KB taps and inputs a text "I plan to go to an Internet cafe by myself" in the input box K21. When the conversation system B1 detects that duration in which the user taps and inputs the text reaches preset reply duration, the large model may be invoked, and the text currently input by the user and previous conversation content of the two parties in the conversation are used as the conversation scenario data, so that the large model generates a reply based on the conversation scenario data. Alternatively, psychological indicator data of the current user KB and behavior information of the user KB may be collected, so that the conversation scenario data includes the psychological indicator data of the current user KB and the behavior information of the user KB, to generate a reply by using the large model. It may be understood that the large model can analyze, based on the conversation scenario data, an intent the user KA in chatting with the current user KB, which actually is expecting to engage in some activities together with the user KB. Then, the large model automatically generates a reply, where the reply includes a conversation answer and a reason for the answer. The conversation system B1 displays the generated reply in a suggestion card K22.

As shown in the reply shown in the suggestion card K22 in FIG. 2A, the reply includes a box K22A corresponding to the reason for the answer and a box K22B corresponding to the conversation answer. Refer to FIG. 2A. In the box K22A, a specific reason for the answer is "The other party is inquiring about your evening arrangement, with the expectation of engaging in some activities together with you. Your current reply may cause the other party to experience negative emotions". In addition, in the box K22B, the conversation answer generated by the large model and displayed by the conversation system B1 is "Then let's go have fun together!". The user KB can tap a sending control K22C corresponding to the conversation answer "Then let's go have fun together!" to directly send the conversation answer to the user KA. In addition, the user KB can directly select the conversation answer "Then let's go have fun together!" displayed in the box K22B to perform modification, and then tap the sending control K22C to send modified content. In addition, the user KB may also modify original content in the input box based on the displayed conversation answer "Then let's go have fun together!", for example, modify the content to content same as the conversation answer "Then let's go have fun together!", and then the user taps the sending control K23 corresponding to the content in the input box to send the content. It may be understood that the sending control may not be displayed in the suggestion card K22. The user may directly select the conversation answer and the reason for the answer in the suggestion card. In this case, the terminal 100B directly sends the conversation answer and the reason for the answer to the user KA. A specific sending manner is not required herein.

It may be understood that, the specific reason for the answer displayed in the suggestion card K22 analyzes the intent of the user KA in chatting with the current user KB, which actually is expecting to engage in some activities together with the user KB. Therefore, the original reply of the user KB may cause the user KA to experience negative emotions. In addition, based on the obtained psychological indicator data of the user KB, for example, the heart rate is normal and the emotion is calm, it also indicates that the user KB does not exhibit dislike toward the user KA. Therefore, a proper conversation answer "Then let's go have fun together!" may be provided. In this case, in the generated reason for the answer and the conversation answer, emotional tendencies of the two parties are fully considered, and an accurate, friendly, and appropriate reply is provided for the current user, so that when the user communicates with the other party based on the accurate and reasonable reply, the other party does not feel dislike or discomfort.

In some other embodiments, when retrieval is required, retrieval may be performed in various resource databases to obtain a retrieval result, and then the retrieval result obtained from the various types of resource data and content obtained through analysis of the conversation scenario data are fused, to provide a high-quality reply for the user. For example, the large model may fuse the retrieval result obtained from various types of resource data and reply content generated by using the large model based on the conversation scenario data, so that the generated reply includes a fused retrieval result corresponding to the retrieval result. It may be understood that the fused retrieval result includes both content corresponding to the retrieval result and a retrieval answer that corresponds to the retrieval result and that can be used to reply to a message sent by the other party, and the retrieval answer corresponds to the retrieval result. It may be understood that the retrieval answer reflects the reply content generated by using the large model based on the conversation scenario data. In addition, because the obtained retrieval result may include information from a local device and a cloud service, the fused retrieval result generated and displayed in this case enables the user to obtain a comprehensive, more relevant, and more accurate reply.

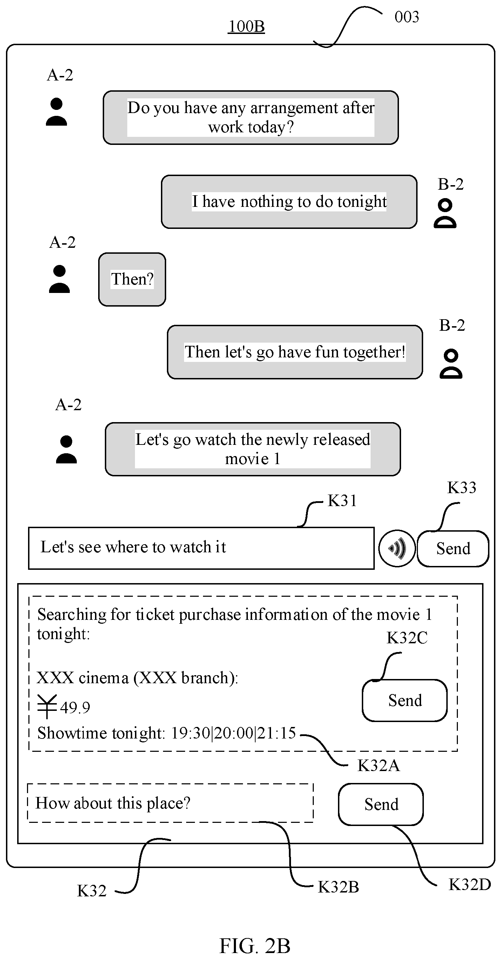

For example, FIG. 2B is a diagram of a chat interface 003 of the terminal 100B based on the conversation system B1 during the chat between the user KA and the user KB according to some embodiments of this application. Conversation content sent by the "user A-2" and the "user B-2" on the interface 003 is the same as that sent by the "user A-1" and the "user B-1" in FIG. 1B. In addition, the user KB inputs "Let's see where to watch it" in the input box K31. In this case, the conversation system B1 generates a reply shown in the suggestion card K32 in FIG. 2B. The reply displayed in the suggestion card K32 includes a fused retrieval result. Refer to FIG. 2B. In a box K32A, content corresponding to a retrieval result is "Searching for ticket purchase information of the movie 1 tonight: XXX cinema (XXX branch): CNY 49.9 Showtime tonight: 19:30|20:00|21:15". Moreover, in a box K32B, the conversation system generates a retrieval answer "How about this place?" corresponding to the retrieval result. It may be understood that movie watching content involved in the current conversation is content closely related to an application related to movie watching. In this case, the terminal may retrieve valid information from the corresponding application, and the generated reply is presented in a preferable manner. In this way, the user KB can quickly obtain information that the user wants, and does not need to search another resource database. In addition, the fused search result includes content generated by the large model based on the conversation scenario data, so that the user does not need to input a search reply related to the found movie ticket information, thereby improving user experience. Similarly, the user may modify the content in the box K32A or the box K32B, and then send the content through the corresponding sending control K32C and the sending control K32D, or directly send the content in the box K32A or the box K32B through the sending control. Alternatively, the user may modify content in the input box K31 based on the reply in the suggestion card K32, and then send the content through the sending control K33 corresponding to the input box K31. Alternatively, the user may directly select the content in the suggestion card K32 to send the content without using the sending control. The specific sending mode is not required herein.

It may be understood that the large language model includes but is not limited to artificial intelligence generated content (artificial intelligence generated content, AIGC), ChatGPT, LaMDA, PaLM, and OPT-IML. Details are not described herein.

It may be understood that the terminal may display the reply in a card, a list, or another form, so that the user intuitively obtains related information.

It may be understood that the conversation system may be any application that can provide a chat function, and may be deployed on any electronic device.

It may be understood that the terminal 100A and the terminal 100B may be any electronic devices running a conversation system, for example, may include but is not limited to mobile phones, tablet computers, vehicle-mounted devices, augmented reality (augmented reality, AR)/virtual reality (virtual reality, VR) devices, ultra-mobile personal computers (ultra-mobile personal computer, UMPC), netbooks, personal digital assistants (personal digital assistant, PDA), servers, server clusters, and the like. This is not limited herein.

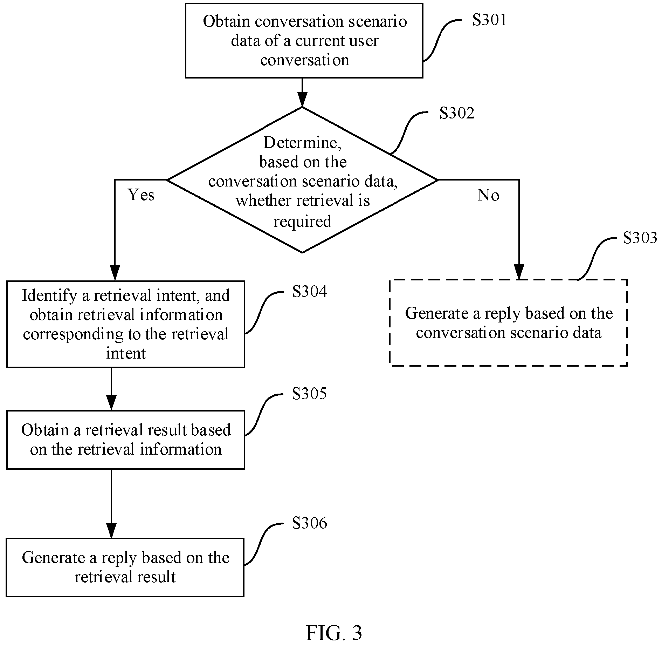

FIG. 3 is a diagram of an interaction method according to an embodiment of this application. In the method, the terminal device displays a user conversation, determines whether retrieval is required, and uses different replies in different cases in which retrieval is required and retrieval is not required. For ease of description, the following uses a processor in a terminal device as an execution body for description. Specific steps are as follows.

S301: Obtain conversation scenario data of a current user conversation.

In some embodiments, a terminal device displays the user conversation, and may monitor a conversation process in the conversation system in real time. When determining that a reply needs to be generated, the terminal device collects the conversation scenario data related to the current user conversation. For example, when a first operation of a user is detected, the conversation scenario data is obtained. It may be understood that the user conversation is any conversation content displayed on the terminal device, for example, chat messages sent by two parties in the conversation displayed on the terminal device.

The first operation may be that the user taps an input box of an interaction interface, the user inputs content such as a text or an emoticon in the input box, or the user taps and performs inputting in the input box for preset reply duration; or the user selects a microphone for voice input; or the user selects a reply control (not shown in the figure) configured on the interface. It may be understood that the first operation may be various operations, provided that the first operation can indicate an operation that the user needs to chat with the other party. Details are not described herein.

The conversation scenario data may include but is not limited to current and historical conversation content of the two parties in the conversation, user behavior information, physiological indicator data of a current user, and the like. The conversation content includes sent content and to-be-sent content, and may be a text, a voice, a video, a picture, or the like. The user behavior information includes user behavior information such as editing, browsing, and sliding a page of the current user in the conversation system. For example, the current chat content relates to a topic that has been chatted in the past. In this case, the user may return to previous chat content for viewing and editing. In this case, the user behavior information includes a user page sliding operation, an editing operation on the past chat content, and viewing chat content data. The physiological indicator data of the current user includes a facial expression, a heart rate, and the like of the current user. For example, for the facial expression, the terminal device may obtain a human facial expression of the user via a camera with permission of the user. The facial expression may correspond to an emotion type such as anger, peace, joy, or sadness. For the heart rate, user heart rate data may be obtained via an internal device or another matching device that can monitor a heart rate. It may be understood that the conversation scenario data may include only conversation content. This is not limited herein. It may be understood that when multi-dimensional conversation scenario data is used, because information about the conversation scenario data is comprehensive, accuracy of a determining result can be improved, so that retrieval can be performed in real time when retrieval is required, thereby improving accuracy and timeliness of conversation processing.

For example, in the scenario shown in FIG. 2A, after it is detected that the user KB inputs a text in the input box K21, latest 10 pieces of sent content of the user A-2 and the user B-2 in the current chat conversation and to-be-sent content input by the user KB in the input box K21 may be obtained. The facial expression of the user captured via the camera, for example, "peace", and heart rate data of "75 bpm" collected via a watch may be further obtained.

For another example, in the scenario shown in FIG. 2B, after it is detected that the user KB inputs a text in the input box K31, latest 10 pieces of sent content of the user A-2 and the user B-2 in the current chat conversation, content input by the user KB in the input box K31, behavior information indicating that the user slides to the topic of the "movie 1" in the chat of the day before yesterday, to view previous content may be obtained. The facial expression of the user captured via the camera, for example, "peace", and the heart rate data of "75 bpm" collected via the watch may be further obtained.

S302: Determine, based on the conversation scenario data, whether retrieval is required.

If no, S303 is performed. If yes, S304 is performed.

It may be understood that the current user conversation may involve some content requiring retrieval, such as movies, food, restaurants, buildings, personal names, trademarks, place names, customs, travel services, transportation means, gossip information, event arrangements, and specific content of various subject knowledge such as law, music, painting, and medicine. Details are not listed herein. In addition, the current user conversation may include a plurality of pieces of content requiring retrieval. Therefore, it needs to be determined whether the current user conversation is a user conversation requiring retrieval. When the current user conversation is the user conversation requiring retrieval, retrieval is required. When the current user conversation is a user conversation not requiring retrieval, retrieval is not required. Therefore, when retrieval is required, a retrieval intent may be accurately identified subsequently, to obtain a retrieval result. In addition, when retrieval is not required, retrieval intent identification and subsequent retrieval do not need to be performed, and a reply is directly generated, thereby saving time and compute resources.

In some embodiments, the terminal device invokes a trained large model to determine whether retrieval is required based on the current conversation scenario data. For example, the large model may determine, based on whether a keyword or a key sentence corresponding to content requiring retrieval is extracted from the current conversation scenario data, whether the current user conversation is the user conversation requiring retrieval, that is, whether retrieval is required. When it is determined, by using the large model, that retrieval is required, S304 is performed; or when it is determined, by using the large model, that retrieval is not required, S303 is performed.

For example, for the scenario corresponding to the small talk shown in FIG. 2A, in this case, the large model may be used to determine that retrieval is not required, and S303 is performed.

For another example, for the scenario in which movie watching topic content exists shown in FIG. 2B, in this case, the large model may be used to identify a keyword related to content such as a movie, to determine that retrieval is required, and S304 is performed.

It may be understood that a capability of determining whether retrieval is required of the large model may be deployed on the terminal device, or may be deployed on a cloud device. When the capability of determining whether retrieval is required of the large model is deployed on the cloud device, the terminal device may send the conversation scenario data to a cloud, so that the cloud specifically performs a process of determining, based on the conversation scenario data, whether retrieval is required, that is, step S302 may also be performed on the cloud, and the cloud feeds back a determining result of the large model to the terminal device.

Specifically, the large model may include a determining model, to determine whether retrieval is required. It may be understood that the determining model may include a neural network model, a convolutional network model, another algorithm, and the like. This is not required herein. In some embodiments, any electronic device, for example, any terminal device or a cloud device, may be used to train the determining model in the large model in advance.

For example, the cloud device trains the large model. The determining model may be trained in the following manner: conversation scenario data related to various conversation scenarios is prepared in advance, and is used as training sample data. For ease of description, the conversation scenario data used for training is referred to as "conversation scenario sample data". In addition, a corresponding label is configured for each piece of conversation scenario sample data, a label of conversation scenario sample data requiring retrieval is configured as a "retrievable identifier", and a label of conversation scenario sample data not requiring retrieval is configured as a "non-retrievable identifier". Then, the training sample data and corresponding labels are input into a to-be-trained initial model for model training, to obtain the determining model.

It may be understood that the conversation scenario sample data includes both a conversation scenario not requiring retrieval, for example, a conversation scenario involving inquiries about the other party's age this year, home address, clothing, or compliments, and a conversation scenario requiring retrieval. For the conversation scenario sample data requiring retrieval, a preconfigured resource database may be used to generate to-be-used conversation scenario sample data, so that the training sample data includes multidimensional content of various types. It may be understood that the resource database configured in the training process is used only in the training process. When the large model is trained and actually used, a resource database for retrieval may include but is not limited to the foregoing resource database, or may not include the foregoing resource database. This is not required herein.

For example, preconfigured resource databases used for training the model may be: (1) a knowledge base, which includes data on common user questions and related answers, such as data with related answers regarding a birth date of Qin Shi Huang; (2) external data sources, which include external data sources that involve a user arrangement and other information, such as online event calendars, social media platforms, or user personal calendars; and (3) third-party application (app) information, which includes registration information and specific function information of the third-party application (app). It may be understood that the third-party application may provide various related functions. When the functions are involved, retrieval is also required. Therefore, the third-party application may be used as important data for determining whether to perform retrieval. Optionally, the conversation scenario sample data used for training may include both conversation content and behavior information and psychological indicator data of the user.

It may be understood that the data content in the foregoing several data sources is frequently involved in people's daily conversations. In this case, the conversation scenario sample data may be generated based on the foregoing data sources, which is widely representative.

It may be understood that the determining model may be obtained in another manner. Details are not described herein.

S303: Generate a reply based on the conversation scenario data.

It may be understood that step S303 is an optional step.

It may be understood that after retrieval determining is performed based on the conversation scenario data, only the following steps S304 to S306 may be performed.

In some embodiments, the terminal device generates the reply based on the conversation scenario data, and the generated reply may include only a conversation answer.

In some other embodiments, the terminal device generates the reply based on the conversation scenario data. The generated reply may include both the conversation answer and a reason for the conversation answer.

For example, refer to the interface 002 shown in FIG. 2A. The conversation answer and the reason for the answer displayed based on the current conversation scenario are shown in the prompt card K22.

In some embodiments, that the terminal device may generate the reply based on the conversation scenario data may be performed by the large model. The large model may include a generation model, used to generate the reply based on the conversation scenario data and other information. The generation model may be a generation model like a recursive neural network or a transformer model. This is not required herein.

It may be understood that a reply generation capability of the large model may be deployed on the terminal device, or may be deployed on a cloud device. When the reply generation capability of the large model is deployed on the cloud device, the terminal device may receive reply content sent by a cloud, to obtain a reply.

In some embodiments, any electronic device, for example, any terminal device or a cloud device, may be used to train the generation model in the large model in advance. For example, the cloud device trains the large model. The cloud device obtains the generation model by using a training method of prompt fine tuning.

Specifically, a large amount of conversation scenario sample data obtained based on the data sources is input into an initial model for training, so that the model learns a language capability, and the model can supplement a context, for example, a preconfigured template with a fixed structure. Then, parameters of a part of the model are fine-tuned, so that an output result includes a reasonable conversation answer and a reason for the answer, and intents and emotional tendencies of the two parties are considered in the output reply. For example, a preset template structure is defined and filled in a corresponding position to generate human-readable replies and suggestions. For example, the template may be: "The other party inquires about your evening arrangement (where "evening" represents time), expecting to do something together with you (where "do something together with you" represents the action content). Your current reply may cause the other party to experience negative emotions (where "the other party feels unhappy" represents the consequence).". Then, key information is filled in the template to obtain a corresponding reply.

It may be understood that another conversation understanding technology and semantic understanding algorithm may be further used to understand questions of the users, and recommend replies that meet the intents of the users and consider factors such as an emotion and a tone of the other party, to provide satisfactory replies.

S304: Identify a retrieval intent, and obtain retrieval information corresponding to the retrieval intent.

In some embodiments, because it is determined that retrieval is required, that is, the conversation scenario data involves content that can be retrieved, the terminal device may invoke the large model, so that the large model identifies the retrieval intent based on the current conversation scenario data. Then, the terminal device generates, based on the retrieval intent, retrieval information that can be retrieved in various resource databases supported by the current terminal device, for example, a query parameter, to perform retrieval based on the retrieval information. It may be understood that the retrieval intent is an intent that can be used to perform precise retrieval in various resource databases to obtain precise information. The retrieval intent is an accurate intent representation of retrieval content used for retrieval, and may relate to various fields, including but not limited to various aspects such as music, law, writing, painting, learning, and life. The retrieval information may be a search sentence, a keyword, or the like corresponding to the retrieval intent.

It may be understood that, in some implementations, an intent identification capability of the large model may be deployed on the terminal device, or may be deployed on the cloud device. When the intent identification capability of the large model is deployed on the terminal device, the terminal device may identify the retrieval intent when retrieval is required, and then generate the retrieval information. When the intent identification capability of the large model is deployed on the cloud device, the cloud device may continue to identify the retrieval intent when retrieval is required, and then generate the retrieval information, that is, step S304 may be performed on the cloud.

Specifically, the large model may further include an intent identification model, to identify the retrieval intent. The intent identification model may be a neural network model, a convolutional network model, another algorithm, or the like. This is not limited herein. The intent identification model can understand and classify user intents in conversation scenarios to obtain intent-related feature vectors. A classification algorithm and a probability model are used, and the output feature vectors are input into the classification algorithm or the probability model to determine a most possible retrieval intent. It may be understood that, when retrieval is required, the retrieval intent is further accurately identified by using the large model, so that required content can be accurately retrieved from various resource databases based on the retrieval information corresponding to the retrieval intent.

For example, refer to the interface 003 shown in FIG. 2B. The large model may identify a retrieval intent related to the movie 1, and based on the identified retrieval intent, generate retrieval information based on the retrieval intent, for example, "Book one movie ticket of the movie 1 tonight", or keywords such as "book", "movie 1", "watch", and "tonight". A specific form of the retrieval information is not required herein.

In some implementations, when training the intent identification model, the cloud device may obtain the intent identification model by using a training method of prompt fine tuning: training the model based on training sample data including various corpora, to enable the model to learn general language representations. Thereafter, the pre-trained model is fine-tuned based on different downstream tasks. For example, the intent identification model is used to output a preliminary intent, then the preliminary intent is fine-tuned to obtain a target retrieval intent, and then the model is fine-tuned based on the target retrieval intent. The training sample data used for training the intent identification model may be the conversation scenario sample data that is from the configured resource database and that is used in a process of training the determining model. For details, refer to step S302. Details are not described herein again.

S305: Obtain a retrieval result based on the retrieval information.

In some embodiments, retrieval is performed in various resource databases based on the retrieval information, to obtain the retrieval result. The various resource databases may include a local resource database of the current terminal device and a cloud resource database connected to the current terminal device. For example, data in the local resource database may be data stored in local storage space, including device information, user preferences, contacts, short messages, call records, photos, local videos, and application data. Data in the cloud resource database may be third-party application or service data provided by the cloud, for example, third-party services deployed on the cloud, such as positioning, ticket purchase, flight ticket booking, and reservation, which are used by various applications.

For example, for the foregoing retrieval information related to the movie 1, based on the retrieval information "Book one movie ticket of the movie 1 tonight" and other information, local data corresponding to a ticket purchase application in the terminal device may be searched, and required content may be searched in a cloud service corresponding to the ticket purchase application, to obtain a local retrieval result and a cloud retrieval result. For example, the cloud retrieval result is as follows: XXX cinema (XXX branch): CNY 49.9 Showtime tonight: 19:30|20:00|21:15.

S306: Generate a reply based on the retrieval result.

In some embodiments, the retrieval result is used as the reply. For example, the local retrieval result and the cloud retrieval result that are obtained based on the movie 1 are combined and sorted, and then displayed on an interface as the reply.

In some other embodiments, the large model fuses the retrieval results into reply content obtained based on the conversation scenario data, to generate the reply. In this case, the reply includes the fused retrieval result. Specifically, the large model includes a generation model. The large model inputs the conversation scenario data and the retrieval results together into the trained generation model, and the generation model fuses the retrieval results to obtain the fused retrieval result. The terminal device displays, to the user, the fused retrieval result generated by the large model, to provide a high-quality reply. It may be understood that a fusion manner is not required herein.

In addition, in some other embodiments, the large model performs fusion based on the generated content of the conversation scenario data and the retrieval results, to obtain the reply. The generated reply includes both the fused retrieval result and a reason for the fused retrieval result.

It may be understood that in some implementations, the reply generation capability of the large model may be deployed on the terminal device, or may be deployed on the cloud device. When the intent identification capability of the large model is deployed on the terminal device, the terminal device may directly display the reply generated by the large model. When the reply generation capability of the large model is deployed on the cloud device, the cloud device may generate the reply, that is, step S306 may be performed on the cloud. Then, the cloud device sends the reply to the terminal device, and the terminal device displays the received reply.

For example, refer to FIG. 2B. In the box K32A, specific content corresponding to the retrieval result is "Searching for ticket purchase information of the movie 1 tonight: XXX cinema (XXX branch): CNY 49.9 Showtime tonight: 19:30|20:00|21:15". In addition, in the box K32B, the terminal device displays the retrieval answer "How about this place?". It may be understood that movie watching content involved in the current conversation is content closely related to an application related to movie watching. In this case, the large model may retrieve valid information from a corresponding application, and the terminal device may present the reply generated by the large model in a preferable manner, to avoid that the user cannot obtain an accurate and detailed answer or solution.

It may be understood that, in some implementations, an example in which the large model performs fusion is used as an example. The used generation model may be the same as the generation model used when retrieval is not required in step S303. However, when training is performed, during training of the generation model, the training sample used for training includes the conversation scenario sample data related to the retrieval intent, and an obtained retrieval result and a conversation scenario sample are used as a training sample that is input to the generation model for training. The training manner may be the same as or different from the training manner of the generation model in step S303. This is not required herein.

It may be understood that an execution sequence of step S301 to step S306 is merely an example. In some other embodiments, another execution sequence may be used, or some steps may be split or combined. This is not limited herein.

It may be understood that the terminal device displays the generated reply on a screen, for example, displays the generated reply in a card format or a list format. The generated reply may include at least one data form of a text, an image, a voice, a video, and a link. The user may perform an editing or sending operation on the displayed reply. For example, the user may directly modify the displayed reply, and after the modification is completed, tap a sending control used to send the displayed reply on the screen, to send a modified reply. For another example, the user does not perform modification, and may directly send the displayed reply through the sending control used to send the displayed reply. In addition, the user may alternatively adaptively modify original input content in the input box based on the displayed reply, and send modified content in the input box through the sending control used to send the content in the input box; or may directly send the content in the input box through the sending control used to send the content in the input box without modifying the original input content in the input box. For details, refer to the foregoing description of sending, by the user KB, the reply or content in the input box in FIG. 2A and FIG. 2B. Details are not described herein again.

It may be understood that in some other embodiments, in step S302, the terminal device obtains the conversation scenario data, where the conversation scenario data includes the current and historical conversation content of the two parties in the conversation, the user behavior information, the physiological indicator data of the current user, and the like. In this case, the terminal device may directly generate the reply by using the large model, and does not need to perform operations such as determining whether retrieval is required, and performing retrieval in the resource database to obtain the retrieval result. It may be understood that, because the conversation scenario data includes multidimensional data, the generated reply can be accurate based on the multidimensional conversation scenario data. It may be understood that the generated reply may be at least one of the retrieval result, the fused retrieval result, the conversation answer, and the corresponding reason for the answer.

It may be understood that the interaction method shown in FIG. 3 may alternatively be executed by an application, for example, the conversation system. The application may invoke another application to generate a reply, or directly generate a reply in real time without invoking another application.

It may be understood that, in some implementations, a function of generating a reply in real time may be configured in an intelligent conversation service (Agent) of the terminal device. When the conversation system on the terminal device specifically interacts with the user, the intelligent conversation service on the terminal device may be invoked with permission of the user, and the intelligent conversation service is used to provide a high-quality and accurate reply for the user. Specifically, the intelligent conversation service may perform an operation based on multi-round conversation content. The intelligent conversation service can invoke the large model to display the reply output by the large model. The large model may determine whether the conversation content requires retrieval, to determine whether to perform retrieval. In addition, when retrieval is required, the large model fuses the retrieval results obtained from the local device and the cloud service with the reply content generated by the large model based on the conversation scenario data, to generate the fused retrieval result. In this case, the device side may display the reply content to the user in a proper manner and locally store the reply content, to provide accurate, reasonable, and high-quality reply content for the user.

In some other implementations, the conversation system may alternatively be directly configured with a reply generation function. In this case, the intelligent conversation service does not need to be invoked, that is, the conversation system may directly invoke the large model to generate the reply.

The following describes an example in which the conversation system invokes the intelligent conversation service to perform real-time reply.

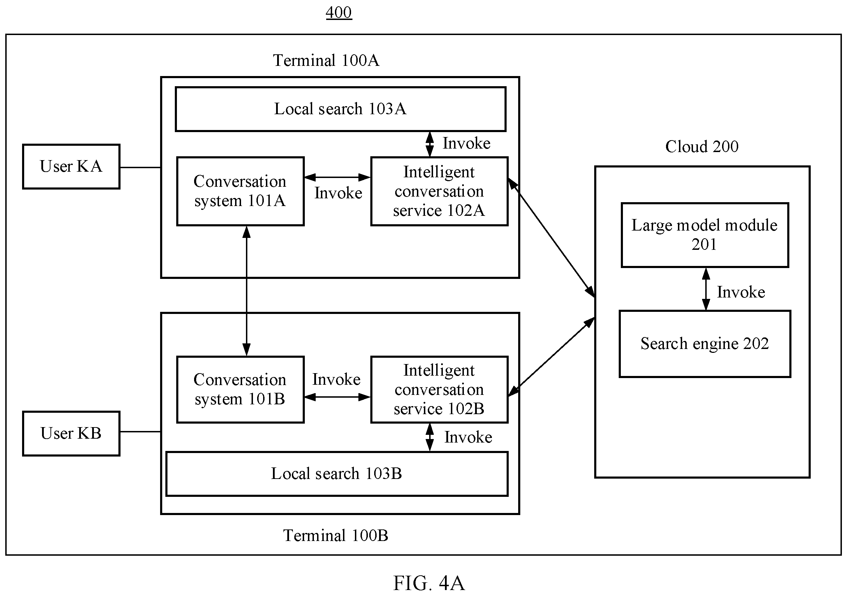

FIG. 4A is a diagram of a system architecture 400 according to some embodiments of this application. As shown in the figure, the system architecture 400 includes two terminal devices (a terminal 100A and a terminal 100B) and one cloud device (a cloud 200). It may be understood that the terminal device includes but is not limited to a mobile device that can be used for communication, such as a mobile phone or a tablet computer. The cloud device includes at least one server, and has a large model computational capability.

Specifically, as shown in FIG. 4A, the terminal 100A includes a conversation system 101A, an intelligent conversation service 102A, and local search 103A.

The conversation system 101A is used to provide a communication service for a user. The conversation system 101A may be an application that can perform instant messaging on the terminal 100A, for example, a voice assistant, a smart assistant, WeChat^{®}, or QQ^{®}. It may be understood that, in some other embodiments, the conversation system 101A, the intelligent conversation service 102A, and the local search 103A may be different applications, or may be combined into a same application, or any two thereof may be combined into a same application. This is not required herein.

The intelligent conversation service 102A is used to invoke the large model computational capability of the cloud 200 or the local search 103A based on conversation scenario data, to generate a reply. It may be understood that, for a specific process in which the intelligent conversation service 102A generates the reply based on the conversation scenario data, refer to steps S301 to S305 shown in FIG. 3. Details are not described herein again. For example, the intelligent conversation service 102A may be a system application on the terminal 100A. When the conversation system 101A is configured to allow to invoke the intelligent conversation service 102A, the conversation system 101A may invoke the intelligent conversation service 102A when detecting an operation of the user in an input box, to generate the reply in real time.

The local search 103A is used to search a local resource database based on local retrieval information to obtain a local retrieval result. The local search 103A searches the local resource database based on the retrieval information.

Similarly, the terminal 100B includes a conversation system 101B, an intelligent conversation service 102B, and local search 103B. Functions of the conversation system 101B, the intelligent conversation service 102B, and the local search 103B are substantially the same as functions of the conversation system 101A, the intelligent conversation service 102A, and the local search 103A. Details are not described herein again.

The cloud 200 includes a large model module 201 and a search engine 202.

The large model module 201 is used to generate a reply based on conversation scenario data. Specifically, the large model module 201 may include a determining model, an intent identification model, and a generation model. The large model module 201 is configured to: obtain conversation scenario data from the terminal 100B or the terminal 100A, determine, by using the determining model, whether retrieval is required based on the conversation scenario data, and when retrieval is required, identify a specific retrieval intent in the conversation scenario data by using the intent identification model, to obtain retrieval information based on the retrieval intent, so that the search engine 202 or the local search 103B performs retrieval. It may be understood that, after the retrieval information is generated, the search engine or a third-party service may be invoked by using the cloud service. In this case, the cloud service may send the retrieval information to an application programming interface (application programming interface, API) of the search engine 202 according to a network protocol (for example, HTTP or WebSocket), and the search engine 202 may alternatively invoke the third-party service, or directly invoke an API of the third-party service, to obtain a related retrieval result or a service response.

In addition, the large model module 201 is further configured to generate a reply by using the generation model. Specifically, when retrieval is not required, the reply is directly generated based on the conversation scenario data from the terminal 100A or the terminal 100B; or when retrieval is required, the reply is generated based on the conversation scenario data and the retrieval result. For a specific process in which the large model module 201 generates the reply based on the conversation scenario data, refer to the foregoing description of generating the reply by the large model in FIG. 3. Details are not described herein again.

The search engine 202 is used to obtain the retrieval result based on the retrieval information sent by the large model module 201, and feed back the retrieval result to the large model module 201. That is, the search engine 202 searches a cloud resource database based on the search information, to obtain the retrieval result.

It may be understood that the system architecture 400 in FIG. 4A is merely an example. In some other embodiments, more or fewer modules may be further included, and the modules may be combined or split. Details are not described herein.

The following uses the terminal 100B as an example to describe a specific process in which the terminal 100B interacts with the cloud 200 to generate a reply in a conversation process.

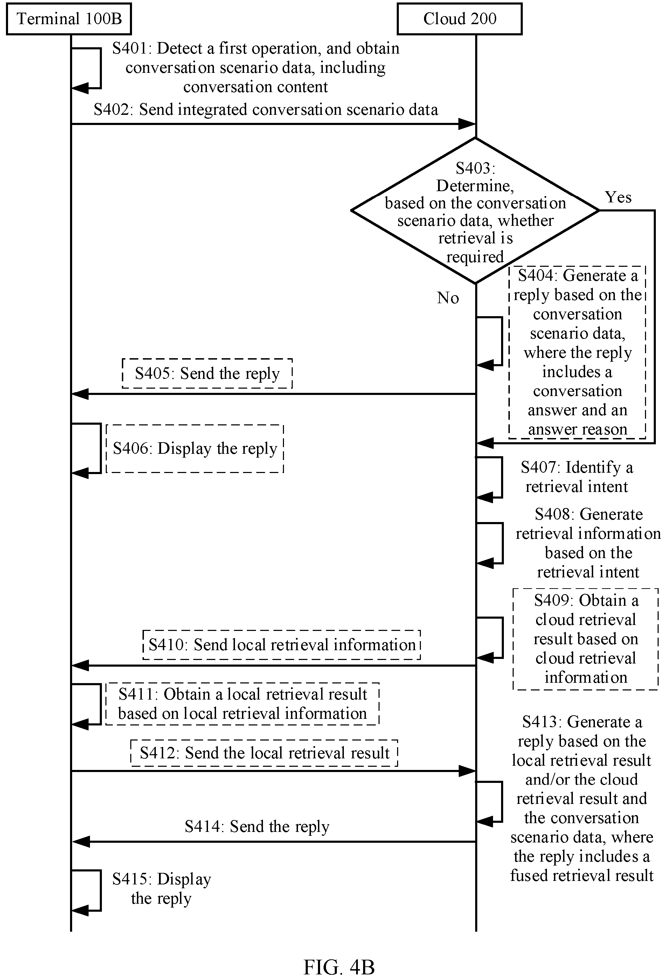

FIG. 4B is a diagram of an interaction process between the terminal 100B and the cloud 200 according to some of embodiments of this application. Specific steps are as follows.

S401: The terminal 100B detects a first operation, and obtains conversation scenario data, including conversation content.

Optionally, the conversation scenario data may also include information such as a user behavior or a physiological indicator.

In some embodiments, when the terminal 100B is allowed by a user to run, the terminal 100B detects the first operation, and obtains the conversation scenario data.

In some implementations, the terminal 100B may obtain the conversation scenario data in the following manners, including information such as the conversation content, the user behavior, and the physiological indicator.

(1) Obtain the conversation content by invoking an API, where the conversation content includes sent content and to-be-sent content. Specifically, the terminal 100B may obtain information such as a text, an audio, a picture, and a video in a current conversation by invoking an API of a chat application (for example, a conversation system B1). The information may include chat content of a user and the other party in a conversation, a time stamp of a conversation text, audio recording, picture content, video content, and the like. In this manner, the terminal 100B may obtain basic content of the conversation for subsequent analysis and processing.

(2) Obtain user behavior information through screen recording. Specifically, the terminal 100B needs to obtain the user behavior information. For example, when the user communicates with the other party in a current conversation system, behavior information such as browsing and editing on a chat record by the user may be obtained based on the current conversation system. The terminal 100B may obtain screen recording permission, and record a browsing record and an editing operation of the user in the chat application, to track an operation behavior of the user, so as to obtain a behavior feature of the user in the conversation process, and comprehensively understand a current conversation scenario.

(3) Obtain physiological indicator information. Specifically, the terminal 100B may be connected to some other devices that collect a user status, such as a watch and a band. In this case, the terminal 100B may interact with an application of the foregoing collection device, and obtain corresponding physiological indicator data, such as a facial expression and heartbeats of the user. In addition, the terminal device 100B may alternatively obtain some sensor data, for example, camera data, based on a built-in sensor, to obtain a current facial expression of the user. The data can provide information about user emotions and reactions, helping accurately analyze and process the conversation scenario.

It may be understood that, to ensure user privacy and data security, the terminal 100B collects and uses only necessary information, and complies with related privacy protection regulations.

S402: The terminal 100B sends integrated conversation scenario data to the cloud 200.

It may be understood that step S402 is optional. In addition, S402 may alternatively be performed by the cloud 200.

In some embodiments, the terminal 100B may organize and integrate collected conversation scenario data based on a time sequence relationship, and send the conversation scenario data to the cloud 200 for processing.

It may be understood that the conversation scenario data includes information about each aspect of the conversation. In this case, the terminal 100B can obtain a complete context of the conversation, so that the large model in the cloud 200 can subsequently generate an accurate and personalized reply and suggestion, thereby enhancing intelligence of the conversation system and improving user experience.

In some implementations, before sending the conversation scenario data to the cloud 200, the terminal 100B needs to perform format conversion on the collected conversation scenario data, and organize the collected conversation scenario data into a transmittable data structure. A specific data format design is determined based on an actual requirement and a system design. Generally, common data exchange formats, such as JSON (JavaScript object notation) and Protocol Buffers, can be used. It may be understood that an actual data format may be adjusted based on a specific requirement and design. This is not limited herein.

It may be understood that the foregoing conversation scenario includes but is not limited to (1) conversation content, involving text, picture, audio, and video information; (2) user behavior information, such as browsing a chat record and editing information; and (3) physiological indicator data, such as a user facial expression and heartbeat data, and different data formats and units are used for the data based on specific devices and applications.

For example, the following describes the sent data based on the conversation scenario corresponding to the interface 002 shown in FIG. 2A. The sent data includes three messages between the user B-2 and the user A-2 shown in FIG. 2A and a to-be-sent reply of the user B-2.

Specifically, pseudocode is shown below:

```
#Conversation content
         Participants: ["User A-2", "User B-2"];
         Conversation message, sent content: {"Timestamp": 2023-10-31T17:30:00; "Sender":
 "User A-2"; "Content": "Do you have any arrangement after work today?"} {"Timestamp": 2023-
 10-31T17:30:10; "Sender": "User B-2"; "Content": "I have no arrangement tonight"}
 {"Timestamp": 2023-10-31T17:30:20; "Sender": "User A-2"; "Content": "Then?"};
         To-be-sent content: {"Timestamp": 2023-10-31T17:30:20; "Sender": "User B-2";
 "Content": "I want to go to an Internet cafe by myself"}
         #User behavior {"Timestamp": 2023-10-31T17:31:30, "Behavior type": "Browse
 history"; "Browsed data": "..."} {"Timestamp": 2023-10-31T17:31:50, "Behavior type": "Edit sent
 content"; "Edited data": "..."}
         #Psychological indicators
         "Emotion": {"Timestamp":2023-10-31T17:32:30; "Facial expression": "Neutral"},
         "Heart rate": {"Timestamp": 2023-10-31T17:32:30; "Value": 80; "Unit": bpm}.
```

It may be understood that, in the foregoing example, the sent data includes a timestamp at which a conversation occurs, a sender, and content that are all recorded in a message list. In addition, it also includes a behavior of browsing history by the user and psychological indicator data of the user. The historical browsing data of the user is not displayed in the current example. The psychological indicators of the user include the facial expression of "neutral" and the heart rate of 80 bpm (quantity of heartbeats per minute). This information can be used for further processing and analysis to provide a more personalized and accurate reply and suggestion.

S403: The cloud 200 determines, based on the conversation scenario data, whether retrieval is required.

If no, S404 is performed. If yes, S407 is performed. It may be understood that steps S404 to S406 are optional steps.

In some embodiments, the cloud 200 may determine, by using the large model, whether retrieval is required. If a determining result output by the large model is an identifier indicating that retrieval is not required, S404 is performed. Otherwise, S407 is performed.

For example, for the conversation scenario data corresponding to the conversation scenario shown in FIG. 2A, the cloud 200 may perform conversation analysis by using a natural language processing (NLP) technology, then find that the user A-2 is inquiring about an arrangement of the user B-2, but the user B-2 replies that no arrangement is made, and obtain, based on the conversation segment content through analysis, that there is no retrieval requirement. Therefore, retrieval is not required. In addition, because the user KB does not explicitly include content related to retrieval in the reply in the to-be-sent message, search for the corresponding retrieval result cannot be performed in the corresponding resource database, for example, search for a target cannot be performed in a third-party application service. In this case, retrieval is not required, and S404 is performed.

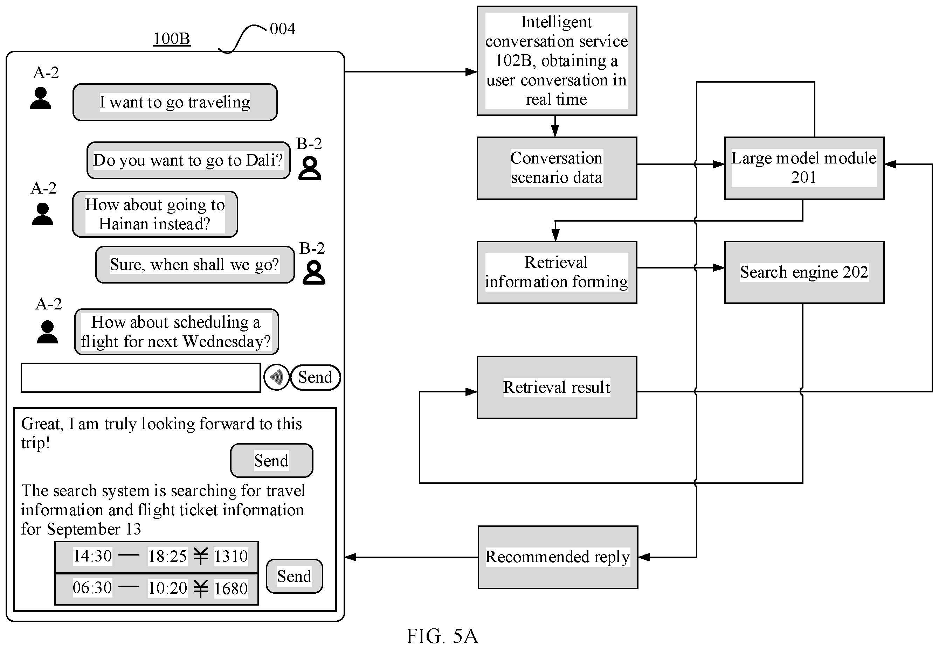

For another example, refer to the scenario shown in FIG. 2B and a chat interface in a travel scenario shown in FIG. 5A. Refer to the conversation content shown in FIG. 2B. It may be found that two parties in the conversation have a retrieval requirement for movie watching. In this case, the cloud 200 determines, based on the conversation scenario data, that retrieval is required. Refer to a conversation scenario involving a travel topic shown in FIG. 5A. In this scenario, a user A-2 sends a message "I want to go traveling", and a user B-2 replies "Do you want to go to Dali?". The user A-2 continues with "How about going to Hainan instead?" The user B-2 sends a message "Sure, when shall we go?" The user A-2 replies with a message "How about scheduling a flight for next Wednesday?". According to the foregoing conversation content, it can be found that the two parties in the conversation needs to travel to Dali, and the user A-2 is asking about a specific task of taking a flight on next Wednesday. In this case, the cloud 200 may determine, based on the conversation scenario data, that retrieval is required. Subsequently, the user B-2 needs to send an item about going to Dali by airplane, and S407 is performed.

S404: The cloud 200 generates a reply based on the conversation scenario data, where the reply includes a conversation answer and a reason for the answer.

In some embodiments, the cloud 200 may generate an accurate and coherent reply by using the large model based on a conversation context corresponding to the conversation scenario data. The large model can use a conversation understanding technology and a semantic understanding algorithm to understand questions of the users in the conversation scenario data, and recommend replies that meet intents of the users and consider factors such as an emotion and a tone of the other party, to provide satisfactory replies.

For example, in the scenario shown in FIG. 2A, the cloud 200 analyzes, based on the question "Then?" of the user A-2 and the content "I have nothing to do tonight" sent by the user B-2, that the user A-2 asks the user B-2 about the night arrangement with the expectation of engaging in some activity together with the user B-2. Therefore, the to-be-sent content of the user B-2 reflects an implicit refusal, which may cause the other party to experience negative emotions. The generation model may generate a conversation answer: "Then let's go have fun together!" and the reason for the answer: "The other party is inquiring about your evening arrangement, with the expectation of engaging in some activities together with you. Your current reply may cause the other party to experience negative emotions".

S405: The cloud 200 sends the reply to the terminal 100B.

In some embodiments, the cloud 200 may generate, according to a related algorithm or rule, a reply for the to-be-sent content of the user and chatted content, and in the generated reply, emotion determining and factors intended to avoid causing displeasure or adverse reactions of the other party are considered. After the reply content is generated, processing may be performed based on a specific format to obtain sending data that meets the format, and the sending data is sent to the terminal 100B.

In some implementations, the generated reply and other related information may form a JSON object. For example, one JSON object can include specific reply content and a timestamp.

The following shows pseudocode for sending data:

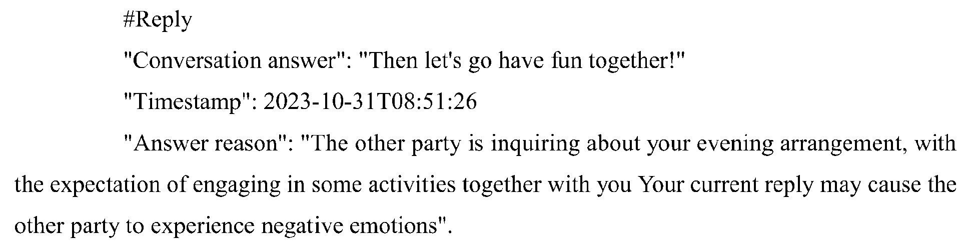

S406: The terminal 100B displays the reply.

In some embodiments, the terminal 100B displays the received reply, and the displayed reply includes the conversation answer and the reason for the answer.

In some implementations, the terminal 100B parses the received JSON object and extracts a required field, for example, obtains the conversation answer, the timestamp, and the reason for the answer in the JSON object, and displays the conversation answer, the timestamp, and the reason for the answer on the interface to provide corresponding feedback for the user, to continue the conversation.

It may be understood that, in this process, the cloud 200 may efficiently transfer the reply and related information to the terminal 100B, so that an application or a platform on the terminal 100B can flexibly process and present a response result.

It may be understood that, in a process of a human-to-human conversation, replies are provided for the two parties in the conversation in real time based on the actually sent content and the to-be-sent content. In addition, with explicit consent of the user, the user behavior and the observed psychological indicators such as the facial expression, the tone, and a body temperature are used to provide accurate and smooth replies, so that the conversation can be smooth and the conversation can develop in a positive direction.

S407: The cloud 200 identifies a retrieval intent.

In some embodiments, after determining that a retrieval requirement is met, for example, the retrieval requirement is flight ticket booking or movie watching, the cloud 200 performs intent identification by using the large model based on the conversation scenario data, to obtain the retrieval intent that can be used for retrieval.

For example, refer to the conversation scenarios in FIG. 2B and FIG. 5A. The cloud 200 separately generates, based on the conversation scenario data, retrieval intents related to movie watching and flight ticket booking.

S408: The cloud 200 generates retrieval information based on the retrieval intent.

In some embodiments, the cloud 200 may generate, based on the retrieval intent, retrieval information suitable for use in a search engine or local search, for example, a query parameter. It may be understood that, because data resource libraries that can be used for retrieval include a data resource library of the terminal and a data resource library on the cloud, the generated retrieval information includes local retrieval information or cloud retrieval information. For example, the local retrieval information is a local query parameter, and the cloud retrieval information is a cloud query parameter.

It may be understood that a format of the retrieval information may be a JSON format, or may be another format. This is not required herein.

It may be understood that the local retrieval information may include a keyword related to the retrieval intent and a search sentence related to the retrieval intent. Specifically, related parameters include: a query intent, a user input (the user input is a search sentence that is generated by the cloud 200 and that can be directly used for local search), a query object, and context information that needs to be used during query, such as a user identity, and a platform and an application of the terminal device.

For example, the following shows pseudocode corresponding to local retrieval information of the terminal:

```
          #"Intent": "Flight ticket booking";
         "User input": "I want to book a flight ticket from Beijing to Sanya"
         "Query object": "Flight ticket"
         "Query context information": {"User identity": "{"ID": "user123","Name": "Zhang
 San"},"Device information": "{"platform": "Andriod","app": "Flight query"}}
```

It may be understood that the user input is a search sentence used for searching in the terminal 100B.

For example, the following shows pseudocode corresponding to the cloud retrieval information on the cloud:

```
         #"Intent": "Flight ticket booking";
         "User input": "I want to book a flight ticket from Beijing to Sanya"
         "Third-party application": "Ctrip travel®"
         "Query context information": {"User identity": "{"ID": "user123","Name": "Zhang
 San"}, "Device information": "{"platform": "iOS","app": "WeChat®"}}
```

It may be understood that the user input is a search sentence used for searching on the cloud 200, for example, the search engine 202. Because there is a third application service on the cloud, for example, a third-party application that may be used for travel or flight ticket booking, retrieval may be performed on a service that is deployed on the cloud and that is of the application related to travel or flight ticket booking.

It may be understood that, because corresponding search tools and resources used for search during search are different between the local search on the terminal and the search on the cloud, the generated search information is also different.

It may be understood that, for the cloud retrieval part S409 and the local retrieval part S410 to S412, any part of the two parts may be performed, and an execution sequence is not limited either. That is, step S409 and steps S410 to S412 each may be optional.

S409: The cloud 200 obtains a cloud retrieval result based on the cloud retrieval information.

In some embodiments, the cloud 200 performs retrieval in a cloud resource database based on cloud retrieval information, to obtain a retrieval result. Specifically, the cloud 200 parses and processes the cloud retrieval information by using the natural language processing (NLP) technology, to generate a parsed specific query statement, so as to perform query to obtain a cloud retrieval result. The cloud retrieval result includes information such as a related retrieval result list, a total quantity of results, and response time of the search engine.

S410: The cloud 200 sends the local retrieval information to the terminal 100B.

In some embodiments, the cloud 200 may send the local retrieval information to the terminal 100B according to a network protocol (such as HTTP or WebSocket).

S411: The terminal 100B obtains a local retrieval result based on the local retrieval information.

In some embodiments, the terminal 100B searches a local resource database based on the local retrieval information, to obtain the local retrieval result. The local resource database may include a local application and local data. Local applications are various software programs installed on the device, and are usually stored in local storage space of the device. Local data and data related to the device, such as device settings, user preferences, contacts, short messages, call records, photos, and videos, are usually stored in the local storage space of the device.

In some implementations, the terminal 100B performs search and matching in the local resource database based on the local retrieval information by using a database query language (such as SQL or NoSQL query) or a local resource search algorithm, to obtain the local retrieval result.

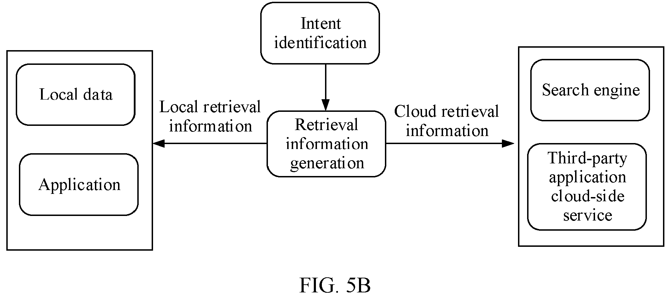

For example, with reference to FIG. 5B, for the conversation scenario of flight taking shown in FIG. 5A, the terminal 100B searches a local application and local data for information related to a flight ticket from Beijing to Sanya based on the local retrieval information.

S412: The terminal 100B sends the local retrieval result to the cloud 200.

S413: The cloud 200 generates a reply based on the local retrieval result and/or the cloud retrieval result and the conversation scenario data, where the reply includes the fused retrieval result.

In some embodiments, the cloud 200 generates the reply based on the local retrieval result and/or the cloud retrieval result and the conversation scenario data by using the large model, where the generated reply includes the fused retrieval result corresponding to the retrieval requirement.

For example, for the travel scenario shown in FIG. 5A, the fused search result may include: "The search system is searching for travel information and flight ticket information for September 13, including a flight ticket link corresponding to 14:30 to 18:25 priced at CNY 1310, and a flight ticket link corresponding to 06:30 to 10:20 priced at CNY 1680", and "Great, I am truly looking forward to this trip!".

In some implementations, the cloud 200 parses, based on a return body that is obtained through cloud retrieval and that corresponds to the cloud retrieval result, for example, a return body from the search engine on the cloud, and information sent by the terminal 100B, the return body corresponding to the cloud retrieval result and information sent by the terminal 100B, constructs an input parameter of the large model based on parsed content, and generates a reply based on the input parameter.

It may be understood that a specific process of generating the reply by the cloud 200 is as follows.
(1) The obtained return body corresponding to the cloud search result includes a search result list, a total quantity of results, and response time of the search engine.

An example of pseudocode of content returned by the search engine is as follows:
{"Flight number": "CAxxx"; "Departure city": "Beijing"; "Departure time": "2023-xx- xx 10:00"; "Arrival city": "Sanya"; "Arrival time": "2023-xx-xx 13:00"; "Airline": "xxx"; "Price": "CNY 1000"}, {"Flight number": "HUxxx"; "Departure city": "Beijing"; "Departure time": "2023-xx-xx 14:00"; "Arrival city": "Sanya"; "Arrival time": "2023-xx-xx 17:00"; "Airline": "xxx"; "Price": "CNY 1200"}; "Total quantity": 2; "Response time": "200".

(2) The parsing the return body corresponding to the cloud retrieval result includes: parsing the return body corresponding to the cloud retrieval result, and extracting the retrieval result list and other related information, such as the total quantity of results.

(3) The constructing the input parameter of the large model based on the parsed content includes: constructing the input parameter of the large model based on the return body corresponding to the cloud retrieval result, where the input parameter includes the retrieval result list, the total quantity of results, and another necessary field, and specific content and a form of the input parameter may be adjusted based on a specific large model and an application scenario.

An example of pseudocode of the input parameter of the large model is as follows:

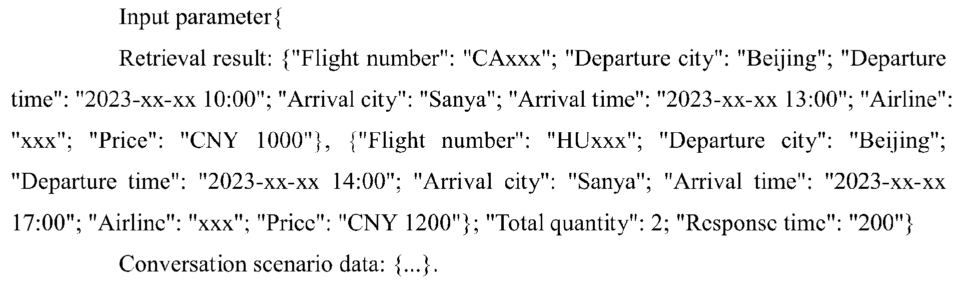

(4) The generating the reply based on the input parameter includes: The large model generates a recommended reply based on the constructed input parameter. It may be understood that the large model may generate related recommended reply content based on the retrieval result, the total quantity of results, and other context information based on a model weight of the large model and knowledge obtained through training. It may be understood that the recommended reply content may be a specific answer, a suggestion, a related resource link, or other information for the user query, and is customized based on a specific application scenario.

An example of pseudocode of the output result of the large model:

```
         Output result{
       "Suggestion type": "Flight reservation", "Suggestion content": "I found the flight ticket
 information for you based on your query:",
         "Detailed suggestion": {"Flight number": "CAxxx"; "Departure city": "Beijing";
 "Departure time": "2023-xx-xx 10:00"; "Arrival city": "Sanya"; "Arrival time": "2023-xx-xx
 13:00"; "Airline": "xxx"; "Price": "CNY 1000"; "Booking interface link": "xxxxx"}, {"Flight
 number": "HUxxx"; "Departure city": "Beijing"; "Departure time": "2023-xx-xx 14:00"; "Arrival
 city": "Sanya"; "Arrival time": "2023-xx-xx 17:00"; "Airline": "xxx"; "Price": "CNY 1200";
 "Booking interface link": "xxxxx"}
```

Parameter description: "Flight number" indicates a unique identifier of a flight; "Departure city" indicates a name or code of a city where the flight is departed; "Departure time" indicates time when the flight is departed; "Arrival city" indicates a name or code of a city where the flight arrives; "Airline" indicates a name or code of an airline that carries the flight; and "Price" indicates a price of the flight ticket. "Booking interface link" is a link in an application for flight ticket reservation. A corresponding page of the application may be directly opened through the link, to book the flight ticket. The booking interface link is a link provided for the terminal side to display a related booking interface.

It may be understood that, when the generation model in the large model is generated, some information may be filled in a template filling manner. For example, a preset template structure is defined and filled in a corresponding position to generate human-readable replies and suggestions.

It may be understood that, the generation model in the large model may fuse related retrieval results (namely, search results) obtained from the local device (namely, the terminal side) and the cloud and original conversation scenario data, that is, fuse retrieval results from a plurality of different sources, so that the generated reply can include a reply corresponding to a precise requirement and be displayed to the user. This provides high-quality reply content for the user, for example, displays a recommended suggestion related to an application.

S414: The cloud 200 sends the reply to the terminal 100B.

S415: The terminal 100B displays the reply.

It may be understood that the terminal 100B receives the reply and displays the reply. It may be understood that the terminal 100B may use a resource and a capability of the terminal side or the cloud side, to provide a comprehensive and accurate reply for the user.

It may be understood that an execution sequence of step S401 to step S415 is merely an example. In some other embodiments, another execution sequence may be used, or some steps may be split or combined. This is not limited herein.

It may be understood that both the terminal 100A and the terminal 100B are devices for displaying an intelligent reply in real time. For the travel conversation scenario shown in FIG. 5A, after the user conversation is displayed on each terminal device, the terminal device can display the intelligent reply. For example, the following describes the conversation of the terminal 100B in detail again. When the user B, shown as the user B-2 in the figure, asks "Do you want to go to Dali?", the terminal device 100B may invoke the intelligent conversation service 102B. In this case, the intelligent conversation service 102B may understand a preference of the user KB for a travel place, and further provide travel information related to Dali based on data resources of the local device and the cloud, such as scenic spot introduction and food recommendation, to provide reference for the user KB. When the user A, shown as the user A-2 in the figure, sends "How about going to Hainan", it may be determined that a destination is Hainan. The intelligent conversation service 102B may continue the conversation with the user KA to learn more information about the travel plan, activity arrangements, and orders, thereby providing personalized suggestions and services. When user KB, shown as the user B-2 in the figure, agrees and asks "When shall we go?", the intelligent conversation service 102B may infer, based on the context of the conversation, that the user is interested in departure time. Based on the information, the intelligent conversation 102B may invoke a cloud service, for example, a flight query interface, to provide related information such as a departure date, flight time, and a price for the user. It may be understood that FIG. 5A shows a data flow in which the intelligent conversation service 102B performs retrieval on the cloud when retrieval is required. Details are not described herein again.

Similarly, when the user KA indicates an intent to travel, the intelligent conversation service 102A identifies the intent of the user, and further invokes a conversation understanding technology and an intent identification algorithm to retrieve related travel information from the local device and the cloud. The intelligent conversation service 102A may provide, by integrating functions such as a travel planning tool, flight query, and hotel reservation, travel suggestions for the user KA, for example, recommending a suitable travel route for going to Hainan, introducing a scenic spot, and recommending a destination.

It may be understood that, according to the interaction method provided in this embodiment of this application, the conversation can be monitored in real time, to avoid a conventional method of replying based on an utterance input by the user. In addition, a plurality of inputs of a conversation object are monitored in real time, including existing conversation content, to-be-sent content, and factors such as a physiological indicator and a behavior of the conversation participant. The plurality of inputs are comprehensively analyzed and processed, in combination with previous conversation historical information, requirements and intents of conversation participants can be comprehensively understood, and comprehensive inference can be performed based on the large model. This enables the intelligent conversation service to provide an ideal reply for the participant in the conversation, and create ideal and harmonious conversation experience.

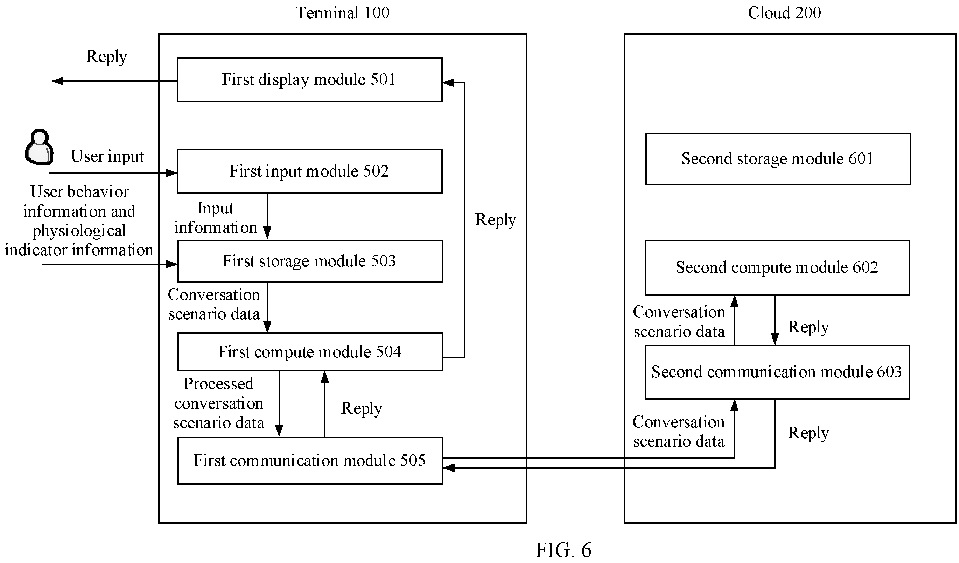

FIG. 6 is a diagram of hardware modules of a terminal 100 and a cloud 200 according to some embodiments of this application.

As shown in FIG. 6, the terminal 100 includes a first display module 501, a first input module 502, a first storage module 503, a first compute module 504, and a first communication module 505.

The cloud 200 includes a second storage module 601, a second compute module 602, and a second communication module 603.

Specifically, for the terminal 100:
the first display module 501 is configured to output and display an interface. In some embodiments of this application, the first display module 501 may display, to a user in a visual form, a reply generated by an intelligent conversation service, which may be in a data form like a text, an image, a video, an audio, and a link. It may be understood that, via the first display module 501, the user may intuitively view and understand the reply provided by the intelligent conversation service.

The first input module 502 is configured to interact with a conversation system by the user. The first input module 502 may be a keyboard, a touchscreen, a speech recognition device, or the like. Via the first input module 502, the user may raise a question, express a requirement, or provide related information for the intelligent conversation service. The user may input a text via a keyboard, tap on a touchscreen, or perform a gesture operation, or use voice input to communicate with the conversation system.

The first storage module 503 is configured to store various data and information that the conversation system needs to use, including related parameters of the intelligent conversation service, local content, information about a third-party application in a local device, a local retrieval result, and the like. The data and information can be repeatedly invoked and referenced by the conversation system or the intelligent conversation service for analysis, reply generation, and search, to provide accurate and useful reply content.

The first compute module 504 is configured to process, analyze, and compute input data and information; may be a central processing unit, including components such as a processor and a memory; and is further configured to process a task such as local search.

The first communication module 505 is configured to implement connection and communication with another device or network, and may support wireless communication or wired communication. Via the first communication module 505, the terminal 100 may be connected to the Internet, to invoke a search capability, obtain latest information and data, and the like. The first communication module 505 may further perform data transmission and interaction with another device or system, to implement a wide range of functions and services.

For the cloud 200:
the second storage module 601 is configured to store and manage a large amount of data, a model, and other related information; may include historical search data, a user configuration file, a system configuration file, a model parameter, a training dataset, and the like; and may be further configured to store and back up data for a long time, and support training, updating, and deployment of a large model.

The second compute module 602 is a core compute resource of the cloud 200, generally includes a group of high-performance computers or server clusters, and is equipped with a powerful processor and graphics processing unit. These compute resources are used to perform a large-scale complex compute task, for example, training of a machine learning model, execution and inference of a deep learning algorithm, and large-scale data processing. The second compute module 602 can provide a higher computational capability and parallelism, so that the system can perform advanced compute tasks such as intent identification and reply recommendation more efficiently. In addition, the second compute module 602 can use a powerful computational capability and a large-scale training model to perform more in-depth analysis and processing on a problem of a user, and generate a more advanced, accurate, and personalized recommended reply.

The second communication module 603 is configured to perform remote communication and data transmission with the terminal device. The second communication module 603 is connected to the terminal device through the Internet, to receive a query and a request from the terminal device in real time. Once receiving the query and the request, the communication apparatus transfers the query and the request to a compute apparatus on the cloud for processing, and returns a processing result to the terminal device. In addition, the communication apparatus is further responsible for maintaining a connection to the terminal device, to ensure stability and security of communication.

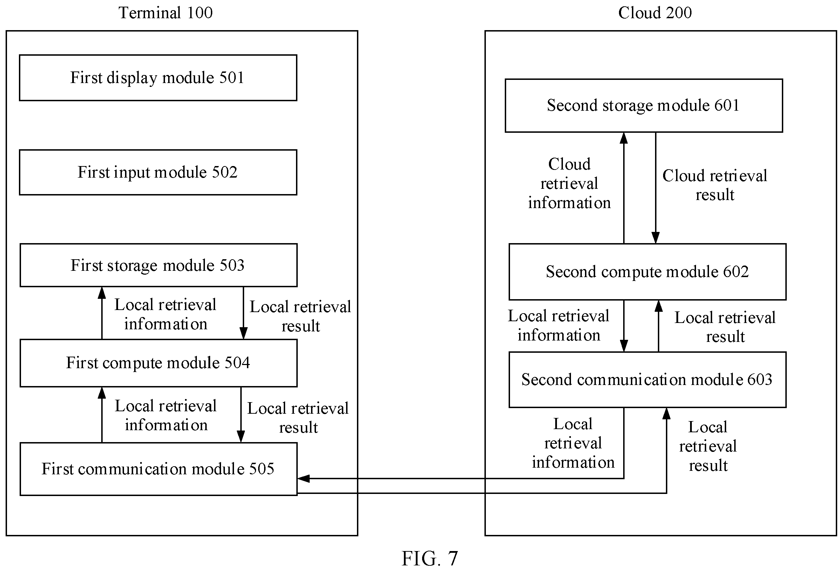

The following briefly describes, with reference to FIG. 6 and FIG. 7, a data flow in which the terminal 100 interacts with the cloud 200 to generate a reply in some embodiments. FIG. 6 shows a data flow in which retrieval is not required based on the conversation scenario data. FIG. 7 shows a data flow in which retrieval is required based on the conversation scenario data.

Specifically, as shown in FIG. 6, the first input module 502 receives an input of the user to obtain input information. For example, the user interacts with the terminal device 100B via a keyboard, a touchscreen, or a speech recognition device. In this case, the first input module 502 receives input information such as a text, a voice, or a video. The first storage module 503 stores the input information and stores data collected by another collection module, for example, user behavior information and physiological indicator information, to obtain current conversation scenario data, and sends the current conversation scenario data to the first compute module 504 for processing. The first compute module 504 may preliminarily process the conversation scenario data to obtain processed conversation scenario data, and then send the processed conversation scenario data to the first communication module 505. The first communication module 505 sends a request to the second communication module 603 on the cloud, where the request includes the conversation scenario data. The second communication module 603 sends the conversation scenario data to the second compute module 602. After determining that retrieval is not required, the second compute module 602 directly generates a reply, and then sends the generated reply to the second communication module 603. The second communication module 603 sends the generated reply to the first communication module 505. The first communication module 505 sends the reply to the first display module 501 under control of the first compute module 504. The first display module 501 displays the reply.

As shown in FIG. 7, after determining that retrieval is required, the second compute module 602 generates a retrieval intent. In this case, local retrieval information and cloud retrieval information may be generated, so that retrieval is separately performed on the terminal and the cloud. The second compute module 602 obtains a second retrieval result from the second storage module 601 based on the cloud retrieval information. The second compute module 602 sends the local retrieval information to the first compute module 504 via the second communication module 603 and the first communication module 505, and the first compute module 504 performs retrieval in the first storage module based on the local retrieval information, to obtain a local retrieval result. It may be understood that the local search result is mainly based on existing data and information, and can provide some quick and simple answers.

Then, the first communication module 505 and the second communication module 603 send the local retrieval result to the second compute module 602, and the second compute module 602 fuses the local retrieval result and the cloud retrieval result, to generate a reply.

It may be understood that, in actual implementation of the interaction method provided in this embodiment of this application, a corresponding algorithm and a corresponding technical tool may be selected based on a specific requirement and a technical platform. In addition, privacy and data security should be properly processed to protect user personal information. In actual applications, more complex technical design and improvement may be required. For example, the first compute module 504 on the terminal side may alternatively be used to fuse the retrieval result and a model reply obtained by the large model based on the conversation scenario data, to obtain the reply. A specific implementation is not required herein.

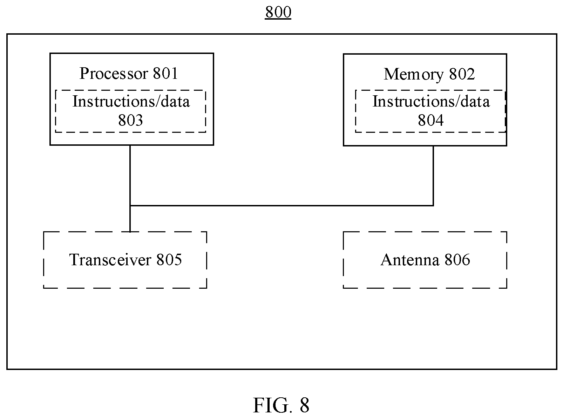

FIG. 8 is a diagram of a structure of an apparatus 800 according to some embodiments of this application. It may be understood that the apparatus 800 may be a terminal device, or may be a cloud device. The apparatus 800 may include one or more processors 801. The processor 801 may also be referred to as a processing unit, and may implement a specific control function. The processor 801 may be a general-purpose processor, a dedicated processor, or the like, for example, may be a baseband processor or a central processing unit. The baseband processor may be configured to process a communication protocol and communication data. The central processing unit may be configured to: control a communication apparatus, for example, a base station, a baseband chip, a terminal, a terminal chip, a DU, or a CU, execute a software program, and process data of a software program.

In an optional design, the processor 801 may alternatively store instructions and/or data 803, and the instructions and/or data 803 may be run by the processor, so that the apparatus 800 performs the interaction method described in the foregoing method embodiment.

In another optional design, the processor 801 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 800 may include a circuit, and the circuit may implement a function of the interaction method in the foregoing method embodiment.

Optionally, the apparatus 800 may include one or more memories 802. The memory stores instructions/data 804, and the instructions may be run on the processor, so that the apparatus 800 performs the methods described in the foregoing method embodiment. Optionally, the memory may further store data. Optionally, the processor may also store instructions and/or data. The processor and the memory may be independently disposed, or may be integrated together. For example, the correspondence described in the foregoing method embodiment may be stored in the memory or stored in the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver, a transceiver circuit, a transceiver apparatus, an interface, an interface circuit, a transceiver module, or the like, and is configured to implement the receiving and sending functions.

Optionally, the apparatus 800 in this embodiment of this application may be configured to perform the interaction method described in FIG. 3 and FIG. 4B in embodiments of this application.

According to the method provided in embodiments of this application, this application further provides a computer program product. The computer program product includes computer program code. When the computer program code is run on a computer, the computer is enabled to perform the steps performed by the apparatus 800 in any embodiment described above.

According to the method provided in embodiments of this application, this application further provides a computer-readable medium. The computer-readable medium stores program code. When the program code is run on a computer, the computer is enabled to perform the steps performed by the apparatus 800 in any embodiment described above.

Embodiments disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system having a processor like a digital signal processor (DSP), a microcontroller, an application-specific integrated circuit (ASIC), or a microprocessor.

The program code may be implemented in a high-level programming language or an object-oriented programming language to communicate with the processing system. The program code can also be implemented in an assembly language or a machine language when needed. The mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer)-readable form, including but not limited to a floppy disk, a compact disc, an optical disc, a read-only memory (CD-ROM), a magnetic optical disc, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in a machine (for example, computer)-readable form.

In the accompanying drawings, some structure or method features may be shown in a particular arrangement and/or order. However, it should be understood that such a particular arrangement and/or sequence may not be required. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that: In the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude another same element existing in the process, the method, the article, or the device which includes the element. Although this application is illustrated and described with reference to some preferred embodiments of this application, a person of ordinary skill in the art should understand that various changes may be made to this application in terms of form and details without departing from the scope of this application.

## Claims

1. An interaction method, applied to an electronic device, wherein the method comprises:
displaying a first user conversation;
when the first user conversation is a user conversation requiring retrieval, displaying a first reply related to a retrieval result corresponding to the first user conversation, wherein the retrieval result is obtained through retrieval based on a retrieval intent of the first user conversation; and
when the first user conversation is a user conversation not requiring retrieval, displaying a second reply for the first user conversation.

2. The method according to claim 1, further comprising: displaying the first reply or the second reply in a card format or a list format, wherein the first reply or the second reply may comprise at least one data form of a text, an image, a voice, a video, and a link.

3. The method according to claim 1 or 2, further comprising:
obtaining conversation scenario data related to the first user conversation, wherein the conversation scenario data comprises at least one of conversation content of the first user conversation, user behavior information associated with the first user conversation, and a physiological indicator of the user when performing the first user conversation;
invoking a large language model, and determining, by the large language model based on the conversation scenario data, whether the first user conversation is the user conversation requiring retrieval; and
when the first user conversation is the user conversation requiring retrieval, identifying, by the large language model, the retrieval intent of the first user conversation based on the conversation scenario data.

4. The method according to claim 3, wherein the first reply comprises a fused retrieval result corresponding to the retrieval result.

5. The method according to claim 4, wherein the fused retrieval result is obtained in the following manner:
generating, by the large language model, the fused retrieval result based on the input retrieval result and the conversation scenario data of the first user conversation.

6. The method according to claim 3, wherein the retrieval result is obtained in the following manner:
performing retrieval in a resource database based on retrieval information corresponding to the retrieval intent, to obtain the retrieval result, wherein the retrieval information comprises at least one of a keyword corresponding to the retrieval intent and a search sentence corresponding to the retrieval intent;
the resource database comprises a local resource database or a cloud resource database;
the local resource database comprises local data or a local application; and
the cloud resource database comprises an application or a service deployed in a cloud.

7. The method according to claim 3, further comprising:
when the first user conversation is the user conversation requiring retrieval, generating, by the large language model, the second reply based on the conversation scenario data.

8. The method according to claim 1, wherein the second reply comprises a conversation answer and a reason for the conversation answer.

9. An interaction method, applied to an electronic device, wherein the method comprises:
displaying a first user conversation; and
displaying a first reply for the first user conversation based on conversation scenario data of the first user conversation, wherein the conversation scenario data comprises at least one of user behavior information associated with the first user conversation and a physiological indicator of the user when performing the first user conversation.

10. The method according to claim 9, wherein the first reply comprises at least one of the following:
a retrieval result corresponding to the first user conversation, a fused retrieval result related to the retrieval result, a conversation answer, and a reason for the conversation answer.

11. The method according to claim 10, further comprising:
invoking a large language model, and determining, by the large language model based on the conversation scenario data, whether the first user conversation is a user conversation requiring retrieval;
displaying the retrieval result or the fused retrieval result when the first user conversation is the user conversation requiring retrieval; and
when the first user conversation is a user conversation not requiring retrieval, displaying the conversation answer and the reason for the conversation answer.

12. The method according to claim 11, wherein the fused retrieval result is obtained in the following manner:
identifying, by the large language model, a retrieval intent of the first user conversation based on the conversation scenario data;
performing, by the large language model, retrieval in a resource database based on retrieval information corresponding to the retrieval intent, to obtain the retrieval result, wherein the retrieval information comprises at least one of a keyword corresponding to the retrieval intent and a search sentence corresponding to the retrieval intent; and
generating, by the large language model, the fused retrieval result based on the input retrieval result and the conversation scenario data of the first user conversation.

13. The method according to claim 11, wherein the conversation answer and the reason for the conversation answer are obtained in the following manner:
when the first user conversation is the user conversation requiring retrieval, generating, by the large language model based on the conversation scenario data, the conversation answer and the reason for the conversation answer.

14. An interaction method, applied to an electronic device, wherein the method comprises:
displaying a first user conversation; and
displaying a first reply corresponding to the first user conversation, wherein the first reply comprises a conversation answer and a reason for the conversation answer.

15. The method according to claim 14, further comprising:
obtaining conversation scenario data related to the first user conversation, wherein the conversation scenario data comprises at least one of conversation content of the first user conversation, user behavior information associated with the first user conversation, and a physiological indicator of the user when performing the first user conversation; and
invoking a large language model, and generating, by the large language model, the first reply based on the conversation scenario data.

16. The method according to claim 15, further comprising:
determining, by the large language model based on the conversation scenario data, whether the first user conversation is a user conversation requiring retrieval; and
generating the first reply when the first user conversation is a user conversation not requiring retrieval.

17. An interaction method, applied to an electronic device, wherein the method comprises:
displaying a first user conversation, wherein the first user conversation is a user conversation requiring retrieval; and
displaying a first reply related to a retrieval result corresponding to the first user conversation, wherein the first reply comprises a fused retrieval result corresponding to the retrieval result, and the retrieval result is obtained through retrieval based on a retrieval intent of the first user conversation.

18. The method according to claim 17, further comprising:
obtaining conversation scenario data related to the first user conversation, wherein the conversation scenario data comprises at least one of conversation content of the first user conversation, user behavior information associated with the first user conversation, and a physiological indicator of the user when performing the first user conversation; and
invoking a large language model, and generating, by the large language model, the first reply based on the conversation scenario data and the retrieval result.

19. The method according to claim 18, further comprising:
determining, by the large language model based on the conversation scenario data, whether the first user conversation is the user conversation requiring retrieval; and
generating, by the large language model, the first reply when the first user conversation is the user conversation requiring retrieval.

20. An electronic device, comprising: a memory, configured to store instructions; and a processor, configured to execute the instructions to implement the interaction method according to any one of claims 1 to 19.

21. A readable storage medium, wherein the readable medium stores instructions, and when the instructions are executed on an electronic device, the electronic device is enabled to perform the interaction method according to any one of claims 1 to 19.

22. A computer program product, wherein the computer program product comprises computer program code, and when the computer program code is run on a computer, the computer is enabled to perform the interaction method according to any one of claims 1 to 19.
